# EUROPÄISCHE PATENTSCHRIFT

(11) **EP 0 771 328 B1**
(45) Veröffentlichungstag und Bekanntmachung des Hinweises auf die Patenterteilung: **07.10.1998**
(21) Anmeldenummer: 95910503.2
(22) Anmeldetag: 20.02.1995
(51) Int. Cl.: C08F 6/00

(54) **VERFAHREN ZUR HERSTELLUNG EINER WÄSSRIGEN POLYMERISATDISPERSION**
METHOD OF PRODUCING AN AQUEOUS POLYMER DISPERSION
PROCEDE DE PREPARATION D'UNE DISPERSION POLYMERE AQUEUSE

(30) Priorität: 03.06.1994 DE 4419518; 04.10.1994 DE 4435423
(43) Veröffentlichungstag der Anmeldung: 07.05.1997
(73) Patentinhaber: BASF AKTIENGESELLSCHAFT, 67056 Ludwigshafen (DE)
(72) Erfinder: STANGER, Bernd, D-67373 Dudenhofen (DE); KELLER, Peter, D-69493 Hirschberg (DE); HARTMANN, Jürgen, D-67227 Frankenthal (DE); TSCHANG, Chung-Ji, D-67098 Bad Dürkheim (DE)
(86) Internationale Anmeldenummer: EP9500607
(87) Internationale Veröffentlichungsnummer: WO9533775

(56) Entgegenhaltungen:
- EP-A- 0 158 523
- FR-A- 2 377 425
- US-A- 28 065
- US-A- 4 360 632

## Beschreibung

Die vorliegende Erfindung betrifft ein Verfahren zur Herstellung einer wäßrigen Polymerisatdispersion bei dem man eine wäßrige Dispersion eines Polymerisats, das wenigstens zwei voneinander verschiedene, wenigstens eine ethylenisch ungesättigte Gruppe aufweisende, Monomere A und B in chemisch gebundener Form eingebaut enthält, in an sich bekannter Weise so erzeugt, daß der Gesamtgehalt der wäßrigen Polymerisatdispersion an freien, d.h. nicht chemisch gebundenen, wenigstens eine ethylenisch ungesättigte Doppelbindung aufweisenden Monomeren (in dieser Schrift "Gehalt an Restmonomeren" oder "Restmonomerengehalt" genannt), bezogen auf die wäßrige Polymerisatdispersion, im Bereich von > 0 bis ≤ 1 Gew.-% liegt und anschließend diesen Restmonomerengehalt durch Einwirkung eines wenigstens ein Oxidationsmittel und wenigstens ein Reduktionsmittel umfassenden radikalischen Redoxinitiatorsystems verringert.

Ferner betrifft die vorliegende Erfindung im Rahmen einer solchen Verfahrensweise resultierende wäßrige Polymerisatdispersionen.

Wäßrige Polymerisatdispersionen sind fluide Systeme, die als disperse Phase in wäßrigem Dispergiermedium Polymerisatteilchen in stabiler disperser Verteilung befindlich enthalten. Der Durchmesser der Polymerisatteilchen liegt im allgemeinen hauptsächlich im Bereich von 0,01 bis 5 µm, häufig hauptsächlich im Bereich von 0,01 bis 1 µm. Die Stabilität der dispersen Verteilung erstreckt sich oft über einen Zeitraum von ≥ 1 Monat, vielfach sogar über einen Zeitraum von ≥ 3 Monaten. Ihr Polymerisatvolumenanteil beträgt, bezogen auf das Gesamtvolumen der wäßrigen Polymerisatdispersion, normalerweise 10 bis 70 Vol.-%.

Ebenso wie Polymerisatlösungen beim Verdampfen des Lösungs-mittels, weisen wäßrige Polymerisatdispersionen beim Verdampfen des wäßrigen Dispergiermediums die Eigenschaft auf, Polymerisatfilme zu bilden, weshalb wäßrige Polymerisatdispersionen in vielfacher Weise als Bindemittel, z.B. für Anstrichfarben oder für Massen zum Beschichten von Leder, Anwendung finden.

Prinzipiell unterscheidet der Fachmann wäßrige Polymerisatdispersionen in wäßrige Sekundär- und in wäßrige Primärdispersionen. Die wäßrigen Sekundärdispersionen sind solche, bei deren Herstellung das Polymerisat außerhalb des wäßrigen Dispergiermediums erzeugt wird, z.B. in Lösung eines geeigneten nichtwäßrigen Lösungsmittels befindlich. Diese Lösung wird anschließend in das wäßrige Dispergiermedium überführt und unter Dispergierung das Lösungsmittel, in der Regel destillativ, abgetrennt. Demgegenüber handelt es sich bei wäßrigen Primärdispersionen um solche, bei denen das Polymerisat unmittelbar in disperser Verteilung befindlich im wäßrigen Dispergiermedium selbst erzeugt wird.

Allen Herstellverfahren ist im wesentlichen gemein, daß zum Aufbau des Polymerisats Monomere, die wenigstens eine ethylenisch ungesättigte Gruppierung aufweisen, mitverwendet werden oder daß dieser Aufbau ausschließlich aus solchen Monomeren erfolgt. Der Einbau solcher wenigstens eine ethylenisch ungesättigte Gruppierung aufweisender Monomeren, erfolgt üblicherweise durch initiierte Polyreaktion, wobei die Art und Weise der angewandten Initiierung insbesondere von den gewünschten anwendungstechnischen Eigenschaften des Zielproduktes bestimmt und diesen daher angepaßt wird. In Betracht kommt beispielsweise eine ionische oder eine radikalische Initiierung. Der Einbau kann aber auch durch katalytisch initiierte polymeranaloge Umsetzung erfolgen. Besonders häufig wird die radikalische Initiierung angewandt, weshalb der Einbau der wenigstens eine ethylenisch ungesättigte Gruppierung aufweisenden Monomeren im Fall von wäßrigen Primärdispersionen in der Regel nach der Methode der radikalischen wäßrigen Emulsions- oder Suspensionspolymerisation und im Fall von wäßrigen Sekundärdispersionen in der Regel nach der Methode der radikalischen Lösungspolymerisation erfolgt.

Da es meist unwirtschaftlich ist, unter Aufrechterhaltung der eigentlichen, die gewünschten Eigenschaften (z.B. Molekulargewicht, Molekulargewichtsverteilung, Verzweigungsgrad etc.) des Zielproduktes bestimmenden, Polyreaktionsbedingungen, den Einbau der wenigstens eine ethylenisch ungesättigte Gruppe aufweisenden Monomeren betreffend, einen vollständigen Umsatz anzustreben, weisen die nach Beendigung dieser Hauptpolyreaktion resultierenden wäßrigen Polymerisatdispersionen im Normalfall einen Gehalt an nicht ins dispergierte Polymerisat chemisch gebunden eingebauten, freien, wenigstens eine ethylenisch ungesättigte Doppelbindung aufweisenden Monomeren auf (dies ist insbesondere dann der Fall, wenn Monomere wie Acrylsäure, Methacrylsäure, Itaconsäure oder deren Amide involviert sind, die eine erhöhte Wasserlöslichkeit aufweisen). Aufgrund der erhöhten Reaktionsfähigkeit der ethylenisch ungesättigten Doppelbindung sind solche Restmonomeren toxikologisch nicht unbedenklich und daher sowohl von Herstellerseite als auch seitens des Verbrauchers unerwünscht.

Prinzipiell stehen bereits unterschiedlichste Methoden zur Verfügung, um den Restmonomerengehalt wäßriger Polymerisatdispersionen zu senken.

Aus der EP-A 584 458 ist beispielsweise bekannt, den Restmonomerengehalt wäßriger Polymerisatdispersionen durch Abstreifen mittels Wasserdampf zu verringern.

Die DE-A 38 34 734 empfiehlt den Gehalt an Restmonomeren von wäßrigen Polymerisatdispersionen dadurch zu mindern, daß man nach Beendigung der Hauptpolyreaktion ein für Initiierungen von Hauptpolyreaktionen, z.B. unter dem Gesichtspunkt der üblicherweise angestrebten anwendungstechnischen Eigenschaften und wirtschaftlichen Polymerisationsbedingungen, weniger geeignetes, radikalisches Redoxinitiatorsystem einwirken läßt, wobei als zu verwendendes Reduktionsmittel insbesondere Hydroxymethansulfinsäure oder deren Salze empfohlen wird. Die US-A 4 529 753 und die EP-B 327 006 empfehlen die Anwendung von Alkalimetallmetabisulfit (Alkalimetalldisulfit) umfassenden Redoxinitiatorsystemen zur Verringerung des Restmonomerengehaltes. Die EP-B 505 163 spricht dieselbe Empfehlung zur Reduktion von (Meth)acrylsäure als Restmonomere in Superabsorbern aus.

Mittels dieser im Stand der Technik empfohlenen Methoden zur Absenkung des Restmonomerengehaltes wäßriger Polymerisatdispersionen ist das Erreichen von Restmonomerengehalten von 1 Gew.-%, bezogen auf die wäßrige Polymerisatdispersion, üblicherweise regelmäßig möglich und nicht mit erhöhten Schwierigkeiten verbunden. Selbstverständlich ist es mittels dieser Methoden auch möglich, in gleicher Weise bezogene Restmonomerengehalte kleiner als 1 Gew.-% zu erzielen.

Unterhalb der 1 Gew.-%-Grenze treten zunehmende Schwierigkeiten der Restmonomerenabsenkung jedoch dann auf, wenn die Restmonomeren aus wenigstens zwei voneinander verschiedenen Monomeren A und B zusammengesetzt sind, da diese Verschiedenheit der Restmonomeren in aller Regel auch eine unterschiedliche Löslichkeit derselben sowohl im wäßrigen Dispergiermedium als auch in den dispergierten Polymerisatteilchen bedingt. Dies führt für unterschiedliche Restmonomere A, B normalerweise zu unterschiedlichen Verteilungsgleichgewichten zwischen den beiden Phasen einer wäßrigen Polymerisatdispersion und hat zur Konsequenz, daß bei Anwendung der bekannten Verfahren zur Restmonomerenabsenkung, unterhalb der vorstehend genannten 1 Gew.-%-Grenze zunehmend signifikant werdend, die Absenkung der voneinander verschiedenen Restmonomeren nicht gleichförmig erfolgt. D.h. entweder erfaßt die zur Absenkung angewandte Methode vorzugsweise diejenigen Restmonomeren, die das wäßrige Dispergiermedium als Aufenthaltsort bevorzugen, oder sie erfaßt vorzugsweise diejenigen Restmonomeren, die sich bevorzugt in den dispergierten Polymerisatpartikeln befinden.

Die Aufgabe der vorliegenden Erfindung war daher, ein Verfahren zur Verringerung des aus wenigstens zwei voneinander verschiedenen Restmonomeren A, B bestehenden Restmonomerengehaltes einer wäßrigen Polymerisatdispersion, deren Restmonomerengehalt, bezogen auf die wäßrige Polymerisatdispersion, im Bereich > 0 bis ≤ 1 Gew.-% liegt, zur Verfügung zu stellen, das bezüglich der wenigstens zwei voneinander verschiedenen Restmonomeren, verglichen mit den Verfahren des Standes der Technik, eine gleichförmigere Verringerung bewirkt.

Als Lösung der Aufgabe wird ein Verfahren zur Herstellung einer wäßrigen Polymerisatdispersion zur Verfügung gestellt, bei dem man eine wäßrige Dispersion eines Polymerisats, das wenigstens zwei voneinander verschiedene, wenigstens eine ethylenisch ungesättigte Gruppe aufweisende, Monomere A und B in chemisch gebundener Form eingebaut enthält, in an sich bekannter Weise so erzeugt, daß der Gesamtgehalt der wäßrigen Polymerisatdispersion an freien, d.h. nicht chemisch gebundenen, wenigstens eine ethylenisch ungesättigte Doppelbindung aufweisenden Monomeren, bezogen auf die wäßrige Polymerisatdispersion, im Bereich von > 0 bis ≤ 1 Gew.-% liegt und anschließend diesen Restmonomerengehalt durch Einwirkung eines wenigstens ein Oxidationsmittel und wenigstens ein Reduktionsmittel umfassenden radikalischen Redoxinitiatorsystems verringert, das dadurch gekennzeichnet ist, daß das Redoxinitiatorsystem als Reduktionsmittel das Addukt eines Ketons, an dessen Aufbau 3 bis 8 C-Atome beteiligt sind, an das Hydrogensulfition HSO₃^{⊖}, die konjugierte Säure dieses Adduktes (d.h. das Addukt des Ketons an die schwefelige Säure H₂SO₃) oder ein Gemisch der genannten Addukte umfaßt. Selbstverständlich ist das erfindungsgemäße Verfahren auch im Bereich von Restmonomerengehalten von 10⁻³ bis 0,5 Gew.-% bzw. 10⁻³ bis 0,1 Gew.-%, bezogen auf die wäßrige Polymerisatdispersion, anwendbar. Desgleichen gilt, wenn die genannten Ausgangsrestmonomerengehalte auf den Polymerisatgehalt der wäßrigen Polymerisatdispersion bezogen sind.

Zur Lösung der der Erfindung zugrunde liegenden Aufgabe konnte von nachfolgendem Stand der Technik ausgegangen werden. In Acta. Polymerica 41 (1990) Nr. 3, S. 187ff ist eine Studie zur Kinetik 5 der radikalischen wäßrigen Emulsionspolymerisaten von Vinylacetat bei Initiierung mit einem radikalischen Redoxinitiatorsystem aus Kaliumpersulfat und Acetonnatriumbisulfit veröffentlicht. Polymer, Volume 35, Number 13, 1994, S. 2859 bis 2861, betrifft eine entsprechende kinetische Studie für Vinylpropionat. Journal of Polymer Science: Part A: Polymer Chemistry, Vol. 28, 411-424 (1990), betrifft die radikalische wäßrige Emulsionspolymerisation von Vinylacetat bei Initiierung mit einem radikalischen Redoxinitiatorsystem aus Kaliumpersulfat und Cyclohexanonnatriumbisulfit. Im Unterschied zum erfindungsgemäßen Verfahren umfassen die genannten Verfahren des Standes der Technik lediglich ein wenigstens eine ethylenische ungesättigte Gruppe aufweisendes Monomeres.

Journal of Elastomers and Plastics Vol. 24, July 1992, S. 192ff offenbart die radikalische wäßrige Emulsionspolymerisation von aus Vinylacetat und n-Butylacrylat bestehenden Monomerengemischen, die wenigstens zu 50 Mol-% aus Vinylacetat bestehen, bei Initiierung mit Kaliumpersulfat und Acetonnatriumbisulfat als radikalischem Redoxinitiatorsystem. Ebenso wie bei den Verfahren des vorgenannten Stand der Technik wurde auch hier die Gesamtmenge des Polymerisationsansatzes vor Beginn der radikalischen wäßrigen Emulsionspolymerisation ins Polymerisationsgefäß vorgelegt.

In allen Ausführungsbeispielen weisen die resultierenden wäßrigen Polymerisatdispersionen mehr als 1 Gew.-% an nicht polymerisierten Monomeren auf.

Die DE-A 32 39 212 empfiehlt die Verwendung von Ketonbisulfit als Reduktionsmittel umfassenden radikalischen Redoxinitiatorsystemen zur Herstellung wäßriger Primärdispersionen nach der Methode der radikalischen wäßrigen Emulsionspolymerisation. Die Ausführungsbeispiele beschränken sich auf wäßrige Vinylacetat/Ethylen-Copolymerisatdispersionen, die in untergeordneten Mengen Acrylsäure einpolymerisiert enthalten.

D.h. ebenso wie beim zuvor genannten Stand der Technik beschränkt sich auch hier die Empfehlung einer Verwendung von Ketonbisulfit als Reduktionsmittel umfassenden radikalischen Redoxinitiatorsystemen im wesentlichen auf die Durchführung einer Hauptpolyreaktion von Vinylacetat als Hauptmonomeres umfassenden wenigstens eine ethylenisch ungesättigte Gruppe aufweisenden Monomeren. In allen Ausführungsbeispielen der DE-A 32 39 212 endet diese Hauptpolyreaktion bei, auf die resultierenden wäßrigen Polymerisatdispersionen bezogenen, Restmonomerengesamtgehalten von deutlich oberhalb 1 Gew.-% und Acrylsäurerestgehalten von > 1000 mg/kg Dispersion, wobei auch hier vor Beginn der radikalischen wäßrigen Emulsionspolymerisation wenigstens 90 Gew.-% der radikalisch zu polymerisierenden Monomeren ins Polymerisationsgefäß vorgelegt werden. Die US-A 2 716 107 offenbart in Beispiel V die radikalische wäßrige Emulsionspolymerisation eines aus Butadien und Styrol bestehenden Monomerengemisches im Beisein eines Acetonnatriumbisulfit umfassenden radikalischen Redoxinitiatorsystems. Der erzielte Polymerisationsumsatz beträgt lediglich 55 %.

Ein wesentlicher Unterschied des erfindungsgemäßen Verfahrens zu den Verfahren des aufgeführten Standes der Technik besteht damit im wesentlichen darin, daß das erfindungsgemäße Verfahren in seinem Kern erst dort einsetzt, wo die Verfahren des relevanten Standes der Technik enden, nämlich am Ende der Hauptpolyreaktion.

An dieser Stelle sei nochmals festgehalten, daß die Natur des im wäßrigen Medium dispergierten Polymerisats für den Erfolg des erfindungsgemäßen Verfahrens im wesentlichen keine Rolle spielt. D.h. der Begriff Polymerisat umfaßt hier sowohl Polykondensate, wie z.B. Polyester, aber auch Polyaddukte wie Polyurethane sowie Polymerisate die durch ionische oder radikalische Polymerisation von ausschließlich wenigstens eine ethylenisch ungesättigte Doppelbindung aufweisenden Monomeren erhältlich sind sowie Mischvarianten der genannten Typen. Wesentlich ist nur, daß am Aufbau des im wäßrigen Medium dispergierten Polymerisats wenigstens zwei voneinander verschiedene, wenigstens eine ethylenisch ungesättigte Gruppe aufweisende Monomere A und B beteiligt sind, so daß überhaupt ein Problem der Restmonomerenentfernung bestehen kann. Die Art des Einbaus der wenigstens zwei voneinander verschiedenen, wenigstens eine ethylenisch ungesättigte Doppelbindung aufweisenden Monomeren ist erfindungsgemäß ohne Belang. Er kann unmittelbar über ionische oder radikalische Polymerisation, über polymeranaloge Umsetzungen oder durch unmittelbare Polyaddition oder Polykondensation erfolgen. Ferner sei nochmals festgehalten, daß die Terminologie "wäßrige Polymerisatdispersion" ohne weiteren Zusatz in dieser Schrift sowohl wäßrige Primär- als auch wäßrige Sekundärdispersionen umfaßt.

Die Herstellung wäßriger Polymerisatdispersionen der vorgenannten verschiedenen Polymerisattypen ist vielfach vorbeschrieben und dem Fachmann daher hinreichend bekannt (vgl. z.B. Encyclopedia of Polymer Science and Engineering, Vol. 8, S. 659ff (1987); D.C. Blackley, in High Polymer Latices, Vol. 1, S. 35ff (1966); H. Warson, The Applications of Synthetic Resin Emulsions, Seite 246ff, Kapitel 5 (1972); D. Diederich, Chemie in unserer Zeit 24, S. 135 bis 142 (1990); Emulsion Polymerization, Interscience Publishers, New York (1965); DE-A 40 03 422 und Dispersionen synthetischer Hochpolymerer, F. Hölscher, Springer-Verlag, Berlin (1969)).

Als wenigstens eine monoethylenisch ungesättigte Gruppe aufweisende Monomere kommen für das erfindungsgemäße Verfahren u.a. insbesondere in einfacher Weise radikalisch polymerisierbare Monomere in Betracht wie die Olefine, z.B. Ethylen, vinylaromatische Monomere wie Styrol, α-Methylstyrol, o-Chlorstyrol oder Vinyltoluole, Ester aus Vinylalkohol und 1 bis 18 C-Atome aufweisenden Monocarbonsäuren wie Vinylacetat, Vinylpropionat, Vinyl-n-butyrat, Vinyllaurat und Vinylstearat, Ester aus vorzugsweise 3 bis 6 C-Atome aufweisenden α,β-monoethylenisch ungesättigten Mono- und Dicarbonsäuren, wie insbesondere Acrylsäure, Methacrylsäure, Maleinsäure, Fumarsäure und Itaconsäure, mit im allgemeinen 1 bis 12, vorzugsweise 1 bis 8 und insbesondere 1 bis 4 C-Atome aufweisenden Alkanolen wie besonders Acrylsäure- und Methacrylsäuremethyl-, -ethyl, -n-butyl, -isobutyl und -2-ethylhexylester, Maleinsäuredimethylester oder Maleinsäure-n-butylester, Nitrile α,β-monoethylenisch ungesättigter Carbonsäuren wie Acrylnitril sowie C₄₋₈-konjugierte Diene wie 1,3-Butadien und Isopren. Die genannten Monomeren bilden im Fall von ausschließlich nach der Methode der radikalischen wäßrigen Emulsionspolymerisation erzeugten wäßrigen Polymerisatdispersionen in der Regel die Hauptmonomeren, die, bezogen auf die Gesamtmenge der nach dem Verfahren der radikalischen wäßrigen Emulsionspolymerisation zu polymerisierenden Monomeren normalerweise einen Anteil von mehr als 50 Gew.-% auf sich vereinen. In aller Regel weisen diese Monomeren in Wasser bei Normalbedingungen (25°C, 1 atm) lediglich eine mäßige bis geringe Löslichkeit auf.

Monomere, die unter den vorgenannten Bedingungen eine erhöhte Wasserlöslichkeit aufweisen, sind beispielsweise α,β-mono-ethylenisch ungesättigte Mono- und Dicarbonsäuren und deren Amide wie z.B. Acrylsäure, Methacrylsäure, Maleinsäure, Fumarsäure, Itaconsäure, Acrylamid und Methacrylamid, ferner Vinylsulfonsäure und deren wasserlösliche Salze sowie N-Vinylpyrrolidon.

Im Fall von ausschließlich nach der Methode der radikalischen wäßrigen Emulsionspolymerisation erzeugten wäßrigen Polymerisatdispersionen werden die vorgenannten, eine erhöhte Wasserlöslichkeit aufweisenden, Monomeren im Normalfall lediglich als modifizierende Monomere in Mengen, bezogen auf die Gesamtmenge der zu polymerisierenden Monomeren, von weniger als 50 Gew.-%, in der Regel 0,5 bis 20, vorzugsweise 1 bis 10 Gew.-%, miteinpolymerisiert.

Monomere, die üblicherweise die innere Festigkeit der Verfilmungen der wäßrigen Polymerisatdispersionen erhöhen, weisen normalerweise wenigstens eine Epoxy-, Hydroxy-, N-Methylol- oder Carbonylgruppe, oder wenigstens zwei nicht konjugierte ethylenisch ungesättigte Doppelbindungen auf. Beispiele hierfür sind N-Alkylolamide von 3 bis 10 C-Atome aufweisenden α,β-mono-ethylenisch ungesättigten Carbonsäuren sowie deren Ester mit 1 bis 4 C-Atome aufweisenden Alkenolen, unter denen das N-Methylolacrylamid und das N-Methylolmethacrylamid ganz besonders bevorzugt sind, zwei Vinylreste aufweisende Monomere, zwei Vinylidenreste aufweisende Monomere sowie zwei Alkenylreste aufweisende Monomere in Betracht. Besonders vorteilhaft sind dabei die Di-Ester zweiwertiger Alkohole mit α,β-monoethylenisch ungesättigten Monocarbonsäuren unter denen die Acryl- und Methacrylsäure bevorzugt sind. Beispiele für derartige zwei nicht konjugierte ethylenisch ungesättigte Doppelbindungen aufweisende Monomere sind Alkylenglykoldiacrylate und dimethacrylate wie Ethylenglykoldiacrylat, 1,3-Butylenglykoldiacrylat, 1,4-Butylenglykoldiacrylate sowie Propylenglykoldiacrylat, Divinylbenzol, Vinylmethacrylat, Vinylacrylat, Allylmethacrylat, Allylacrylat, Diallylmaleat, Diallylfumarat, Methylenbisacrylamid, Cyclopentadienylacrylat oder Triallylcyanurat. In diesem Zusammenhang von besonderer Bedeutung sind auch die Methacrylsäure- und Acrylsäure C₁-C₈-Hydroxyalkylester wie n-Hydroxyethyl-, n-Hydroxypropyl- oder n-Hydroxybutylacrylat und -methacrylat sowie Verbindungen wie Diacetonacrylamid und Acetylacetoxyethylacrylat bzw. -methacrylat. Die vorgenannten Monomeren werden im Fall von ausschließlich nach der Methode der radikalischen wäßrigen Emulsionspolymerisation erzeugten wäßrigen Polymerisatdispersionen, bezogen auf die Gesamtmenge der zu polymerisierenden Monomeren, meist in Mengen von 0,5 bis 10 Gew.-% miteinpolymerisiert.

Die Vorteile des erfindungsgemäßen Verfahrens kommen insbesondere dann zur Geltung, wenn die zu beseitigenden Restmonomeren mehr als zwei voneinander verschiedene wenigstens eine ethylenisch ungesättigte Gruppe aufweisende Monomeren umfassen. D.h. seine Anwendung erweist sich dann als günstig, wenn drei oder vier oder fünf oder sechs oder mehr voneinander verschiedene Restmonomere Bestandteil der erfindungsgemäß zu behandelnden wäßrigen Polymerisatdispersion sind.

Dies gilt vor allem dann, wenn die in der wäßrigen Polymerisatdispersion enthaltenen Restmonomeren so beschaffen sind, daß sie bei den Nachpolymerisationsbedingungen, vorzugsweise ca. 55°C und ca. 1 bar, voneinander signifikant verschiedene molare Löslichkeiten L in 1000 g Wasser (= molale Löslichkeit in Wasser) aufweisen (in der Regel sind diese Löslichkeiten im wesentlichen mit denen bei 25°C, 1 bar, ca. identisch).

Bezeichnet man in einem Restmonomerengemisch dasjenige Restmonomere, das die höchste molale Löslichkeit L_{A} aufweist mit A und dasjenige Restmonomere, das die geringste molale Löslichkeit L_{B} aufweist mit B, dann tritt der erfindungsgemäße Erfolg im wesentlichen unabhängig davon ein, ob das Verhältnis L_{A}/L_{B} einen Wert ≥ 1,1 oder ≥ 1,5 oder ≥ 2 oder ≥ 5 oder ≥ 10 oder ≥ 50 oder ≥ 100 oder ≥ 1000 oder ≥ 100 000 aufweist.

D.h. der erfindungsgemäße Erfolg tritt in der Regel ein, wenn die Restmonomeren wenigstens ein Restmonomeres, das in der vorseitigen Auflistung möglicher Restmonomere der Gruppe der mäßig bis gering in Wasser löslichen zugeordnet wurde, und wenigsten ein Restmonomeres, das in der entsprechenden Auflistung der Gruppe mit erhöhter Wasserlöslichkeit zugeordnet wurde, enthalten.

Der erfindungsgemäße Erfolg tritt auch dann ein, wenn das Restmonomerengemisch Vinylacetat, bzw. Vinylacetat und Ethylen, nicht umfaßt. Desgleichen gilt, wenn das dispergierte Polymerisat weniger als 50 Gew.-% an Vinylacetat, bzw. an Vinylacetat und Ethylen, einpolymerisiert enthält.

Der erfindungsgemäße Erfolg tritt insbesondere auch dann ein, wenn das Restmonomerengemisch wenigstens eines der nachfolgenden in Wasser in besonders geringem Ausmaß löslichen Monomeren Styrol, Butadien, n-Butylacrylat und 2-Ethylhexylacrylat und wenigstens eines der nachfolgenden in Wasser besonders gut löslichen Monomeren Acrylsäure, Methacrylsäure, Itaconsäure, Acrylamid und Methacrylamid beinhaltet. Aber auch wenn das Restmonomerengemisch bereits mäßig in Wasser lösliche Monomere wie Methylmethacrylat, Vinylacetat und/oder Acrylnitril neben wenigstens einem der vorgenannten als besonders gut löslich bezeichneten Monomeren aufweist, ist das erfindungsgemäße Verfahren zu empfehlen.

Erwähnenswert ist dabei insbesondere die bei Anwendung des erfindungsgemäßen Verfahrens in voll befriedigender Weise zu erzielende Absenkung des Restgehaltes an Acrylnitril, da dessen Beseitigung ganz generell als schwierig gilt.

Ganz besonders hervorzuheben ist jedoch, daß das erfindungsgemäße Verfahren zur Entfernung von Restmonomeren in wäßrigen Polymerisatdispersionen auch die Acrylsäure in vollem Umfang erfaßt und daß die Acrylsäureabsenkung dann besonders effizient bewirkt wird, wenn gleichzeitig Acrylnitril als weiteres Restmonomeres vorhanden ist. So war es, im Unterschied zum erfindungsgemäßen Verfahren, mittels der im Stand der Technik verfügbaren Verfahren zur Restmonomerenreduzierung in wäßrigen Polymerisatdispersionen bisher nicht möglich, Acrylsäure-Restmonomeren-Gehalte (in anionischer und/oder saurer Form vorliegend) von unter 100 oder 50, geschweige denn unter 40 oder unter 25 oder gar unter 10 mg Acrylsäure pro kg wäßriger Polymerisatdispersion bzw. pro kg dispergiertem Polymerisat zu erreichen. Erfindungsgemäß bereitet selbst das Erreichen eines Acrylsäurerestgehaltes von 1 mg pro kg wäßriger Polymerisatdispersion bzw. pro kg dispergiertem Polymerisat, und darunter, üblicherweise keine besonderen Schwierigkeiten.
Diese niederen Restmonomerengehalte sind auch für die anderen genannten Monomeren erzielbar.

Eine entsprechende Absenkung des Acrylsäuregehaltes durch Strippen mittels Wasserdampf wäre zwar theoretisch denkbar, aufgrund des diesbezüglich erforderlichen extremen Zeit- und Dampfaufwandes praktisch jedoch nicht realisierbar, und die bisher empfohlenen Verfahren zur Nachpolymerisation durch Einwirkung radikalischer Initiatorsysteme erfassen im wesentlichen entweder nur die in der wäßrigen Phase oder nur die im Polymerisat gelöste Acrylsäure bzw. erzeugen im Rahmen der erforderlichen Anwendungsmenge verschiedenste Folgeprodukte in solchen Mengen, daß damit eine Schädigung der wäßrigen Polymerisatdispersion einhergeht.

Die vorteilhafte Wesensart des erfindungsgemäßen Verfahrens wird demgegenüber, ohne Anspruch auf Gültigkeit, darauf zurückgeführt, daß das als Reduktionsmittel mitzuverwendende Addukt eines niederen Ketons an das Hydrogensulfition amphiphilen Charakter aufweist. D.h. es besitzt sowohl lipophile als auch hydrophile Eigenschaften. Von besonderer Bedeutung dürfte auch die geringe Oberflächenladungsdichte des Adduktanions sein. Vermutlich bilden sich im Verlauf des erfindungsgemäßen Verfahrens aus den vorgenannten Addukten entsprechende amphiphile Radikale, die dann in der Lage sind, sowohl in die Polymerisatphase als auch in die wäßrige Phase einzudringen. D.h. im Unterschied zu den Verfahren des Standes der Technik erfaßt die erfindungsgemäße Verfahrensweise so vermutlich sowohl den Teil der Restmonomeren, der sich im wäßrigen Dispergiermedium befindet (d.h. insbesondere diejenigen Restmonomeren, mit erhöhter Wasserlöslichkeit) als auch den Teil der Restmonomeren, der sich in den Polymerpartikeln aufhält (d.h. insbesondere diejenigen Restmonomeren mit geringer Wasserlöslichkeit).

Das Erfassen beider möglichen Aufenthaltsphasen ist natürlich auch bezüglich der Absenkung einer einzelnen individuellen Monomerensorte von Vorteil und dürfte für die erfindungsgemäß zu erzielende, in bemerkenswerter Weise wirksame, Acrylsäureabsenkung verantwortlich zeichnen.

Die im Rahmen des reduktiven Verbrauchs der erfindungsgemäß einzusetzenden Addukte entstehenden Folgeprodukte mindern darüber hinaus die Qualität (insbesondere die Stabilität) der wäßrigen Polymerisatdispersion allenfalls in geringem Ausmaß. Dies eröffnet auch die Möglichkeit, das erfindungsgemäße Verfahren und die Stabilität strapazierende Strippverfahren simultan anzuwenden, d.h. chemische und physikalische Restmonomerenverringerung direkt zu koppeln, wie es die US-A 4 529 753 empfiehlt.

Ein weiterer Vorteil des erfindungsgemäßen Verfahrens liegt darin begründet, daß es z.B. im Unterschied zur Restmonomerenbeseitigung durch Strippen mittels Wasserdampf ohne Schwierigkeiten im wesentlichen unabhängig vom Feststoffvolumengehalt (Feststoffvolumen bezogen auf das Volumen der Polymerisatdispersion) der wäßrigen Polymerisatdispersion anwendbar ist. D.h. der Feststoffvolumengehalt kann sowohl 10 bis 50, als auch 20 bis 60 aber auch 30 bis 70 Vol.-% betragen, wie dies z.B. bei den wäßrigen Polymerisatdispersionen der DE-A 42 13 965 der Fall ist, wobei die Anwendbarkeit bei hoher Feststoffvolumenkonzentration (50 bis 70 Vol.-% und höher) besonders interessiert.

Wäßrige Polymerisatdispersionen, deren dispergiertes Polymerisat Acrylsäuremonomere chemisch gebunden aufweist, sind auf den verschiedensten Anwendungsgebieten von Bedeutung, weshalb das Problem der Acrylsäure-Restmonomeren-Verringerung ein besonders virulentes ist.

Häufig wird Acrylsäure neben anderen wenigstens eine ethylenisch ungesättigte Gruppierung aufweisenden Monomeren in das dispers verteilte Polymerisat eingebaut, um dessen disperse Verteilung im wäßrigen Dispergiermedium allein oder mitzustabilisieren. In diesen Fällen beträgt der Gehalt an eingebauter Acrylsäure in der Regel 0,1 bis 5, vorzugsweise 0,5 bis 4 Gew.-%, bezogen auf das dispergierte Polymerisat. Ebenso wie die stabilisierende Wirkung der Acrylsäure auf deren Eigenschaft, unter Dissoziation Carboxylationen zu bilden, beruht, beruht auch ihr Einfluß auf die Rheologie wäßriger Polymerisatdispersionen auf dieser Eigenschaft. Der letztgenannte Einfluß ist insbesondere dann nennenswert, wenn der Gehalt an in das Polymerisat eingebauter Acrylsäure ≥ 5 bis 60 Gew.-%, auf das Polymerisat bezogen, beträgt. Erhöht man den pH-Wert wäßriger Dispersionen von Polymerisaten des vorgenannten Acrylsäuregehalts, so nimmt deren dynamische Viskosität beträchtlich zu. Mit Vorteil werden derartige wäßrige Polymerisatdispersionen daher als Verdickerdispersionen eingesetzt (vgl. z.B. DE-PS 1164095, DE-PS 1264945, DE-PS 1258721, DE-PS 1546315 u. DE-PS 1265752). Diesbezüglich werden sie in saurem Medium mit relativ geringer Viskosität erzeugt. Die verdickende Wirkung wird erst beim Anwender durch pH-Wert Erhöhung bewirkt. Damit liegt einer der Fälle vor, bei denen die Restmonomerenverringerung beim Hersteller der wäßrigen Polymerisatdispersion bei pH-Werten des wäßrigen Dispergiermediums von unter 7 durchzuführen ist. Eine andere solche Fallkonstellation ist dann gegeben, wenn das dispergierte Polymerisat N-Alkylol-Gruppen wie z.B. N-Methylol-Gruppen aufweist, die beim Verfilmen der wäßrigen Polymerisatdispersion im sauren pH-Bereich zu Vernetzung führende Kondensationsreaktionen einzugehen vermögen (vgl. DE-PS 40 40 959 und EP-A 147 759). Unter diesem Gesichtspunkt ist es von besonderem Vorteil, daß das erfindungsgemäße Verfahren zur Beseitigung von Restmonomeren sowohl im alkalischen als auch im sauren pH-Bereich angewendet werden kann. D.h. anwendbar ist der pH-Bereich des wäßrigen Dispergiermediums von 1 bis 12, bevorzugt wird der pH-Bereich von 2 bis < 7, besonders bevorzugt der pH-Bereich von 2 bis 6 und ganz besonders empfehlenswert ist die Durchführung im pH-Bereich 2 bis 5. Die Durchführung der erfindungsgemäßen Restmonomerenabsenkung in saurem wäßrigem Medium ist auch insofern von Vorteil, als das Redoxpotential der erfindungsgemäß zu verwendenden radikalischen Redoxinitiatoren im sauren pH-Bereich üblicherweise einen höheren Wert aufweist, womit normalerweise eine erhöhte Radikalausbeute einhergeht.

Hinsichtlich der im Rahmen der erfindungsgemäßen Restmonomerenabsenkung anzuwendenden Temperaturen wird der Bereich von 0 bis 100°C, vorzugsweise 20 bis 100°C, in der Regel 20 bis 85°C, empfohlen. Besonders günstig ist es, die erfindungsgemäße Nachpolymerisation oberhalb der Mindestfilmbildetemperatur, MFT (Weißpunkt), der resultierenden wäßrigen Polymerisatdispersion durchzuführen. Bei wäßrigen Polymerisatdispersionen, deren MFT unterhalb 0°C liegt, tritt an die Stelle der MFT die statische Glasübergangstemperatur Tg (DSC, midpoint temperature) des dispergierten Polymerisats (vgl. Ullmann's Encyclopedia of Industrial Chemistry, VCH, Weinheim, Vol. A21 (1992), S. 169). Vorzugsweise liegt die Arbeitstemperatur wenigstens 20, besser wenigstens 40, günstiger wenigstens 60, noch besser wenigstens 80 und ganz besonders vorteilhaft wenigstens 100°C oberhalb der relevanten MFT- bzw. Tg-Werte. Bei Polymerisatdispersionen, die mehr als eine Tg aufweisen, ist der tiefstliegende dieser Werte anzuwenden. Vorgenannte Zusammenhänge sollten für radikalische Nachpolymerisationen in wäßrigen Polymerisatdispersionen von allgemeiner Gültigkeit sein.

Mit zunehmender Reaktionstemperatur wächst die Gefahr, daß das als Reduktionsmittel mitzuverwendende Addukt zerfällt und sich die ketonische Komponente verflüchtigt. Im Bereich um 100°C und oberhalb von dieser Temperatur wird das erfindungsgemäße Verfahren daher vorzugsweise im Autoklaven durchgeführt. Der besonders bevorzugte Temperaturbereich liegt bei 20 bis 65°C und beträgt ganz besonders bevorzugt 40 bis 65°C. Als Drucke kommen z.B. 1 bar bis 15 bar in Betracht.

Wie bereits erwähnt, ist das erfindungsgemäße Verfahren insbesondere auf solche wäßrigen Polymerisatdispersionen anwendbar, deren dispergiertes Polymerisat, abzüglich der erfindungsgemäßen Restmonomerenbeseitigung, nach der Methode der radikalischen wäßrigen Emulsionspolymerisation aus wenigstens eine ethylenisch ungesättigte Gruppe aufweisenden Monomeren erzeugt wird, weshalb sich sämtliche in dieser Schrift gemachten Aussagen vor allem auf solche nach der Methode der radikalischen wäßrigen Emulsionspolymerisation hergestellten wäßrigen Primärdispersionen beziehen. Dabei wird die radikalische wäßrige Emulsionspolymerisation vorzugsweise nach dem Zulaufverfahren durchgeführt. D.h. die überwiegende Menge der zu polymerisierenden Monomeren, in der Regel 50 bis 100, vorzugsweise 70 bis 100, besonders bevorzugt 80 bis 100 und ganz besonders vorteilhaft 90 bis 100 Gew.-% ihrer Gesamtmenge, werden dem Polymerisationsgefäß erst ab Beginn der radikalischen wäßrigen Emulsionspolymerisation gemäß des Fortschreitens der Polymerisation der bereits im Polymerisationsgefäß befindlichen Monomeren zugesetzt. In der Regel erfolgt der Zusatz durch kontinuierliche Zufuhr (in der Regel als reiner Monomerenzulauf oder in wäßriger Phase voremulgiert) und zwar so, daß wenigstens 80, bevorzugt wenigstens 90 und ganz besonders bevorzugt wenigstens 95 Gew.-% der bereits im Polymerisationsgefäß befindlichen Monomeren einpolymerisiert sind. Zur Einstellung der Teilchengröße der dispergierten Polymerisatpartikel können dabei sogenannte wäßrige Saat-Polymerisatdispersionen mitverwendet werden (vgl. EP-B 40419 u. Encyclopedia of Polymer Science and Technology, Vol. 5, John Wiley & Sons Inc., New York (1966) S. 847).

Als radikalische Polymerisationsinitiatoren kommen für die vorstehend beschriebene Hauptpolymerisationsreaktion alle diejenigen in Betracht, die in der Lage sind, eine radikalische wäßrige Emulsionspolymerisation auszulösen. Es kann sich dabei sowohl um Peroxide als auch um Azoverbindungen handeln. Selbstverständlich kommen jedoch auch Redoxinitiatorsysteme in Betracht. Im Regelfall wird das zur Hauptpolymerisation eingesetzte radikalische Initiatorsystem von dem erfindungsgemäß für die Nachpolymerisation zu verwendenden radikalischen Initiatorsystem verschieden sein. Auch werden in der Regel wenigstens 50 Gew.-%, häufiger wenigstens 75 Gew.-% und meistens wenigstens 90 Gew.-% der im Rahmen der Hauptpolymerisation zu polymerisierenden Monomeren ohne Beisein eines erfindungsgemäßen Reduktionsmittels polymerisiert. D.h. im Normalfall wird die Hauptpolymerisation kein erfindungsgemäßes Reduktionsmittel umfassen. Um die radikalische wäßrige Emulsionspolymerisation als Hauptpolyreaktion aus der Sicht der gewünschten Eigenschaften sowie bezüglich einer hohen Wirtschaftlichkeit besonders effizient zu führen, ist die Verwendung von Peroxodischwefelsäure und/oder deren Alkalimetallsalzen und/oder ihrem Ammoniumsalz als radikalische Starter bevorzugt. Vorzugsweise beträgt die Menge der eingesetzten radikalischen Initiatorsysteme, bezogen auf die Gesamtmenge der zu polymerisierenden Monomeren, 0,1 bis 2 Gew.-%. Die Art und Weise, in der das radikalische Initiatorsystem im Verlauf der beschriebenen radikalischen wäßrigen Emulsionshauptpolymerisation dem Polymerisationsgefäß zugegeben wird, ist eher von untergeordneter Bedeutung. Das Initiatorsystem kann sowohl vollständig in das Polymerisationsgefäß vorgelegt, als auch nach Maßgabe seines Verbrauchs im Verlauf der radikalischen wäßrigen Emulsionspolymerisation kontinuierlich oder stufenweise zugesetzt werden. Im einzelnen hängt dies in an sich dem Durchschnittsfachmann bekannter Weise sowohl von der chemischen Natur des Initiatorsystems als auch von der Polymerisationstemperatur ab.

Eine unmittelbare Konsequenz der vorgenannten Tatsache ist, daß als Reaktionstemperatur für die vorgenannte radikalische wäßrige Emulsionshauptpolymerisation der gesamte Bereich von 0 bis 100°C in Betracht kommt, Temperaturen von 70 bis 100°C, vorzugsweise 80 bis 100°C und besonders bevorzugt > 85 bis 100°C jedoch bevorzugt angewendet werden.

Die Anwendung von erhöhtem oder vermindertem Druck ist möglich, so daß die Polymerisationstemperatur auch 100°C übersteigen und bis zu 130°C und mehr betragen kann. Vorzugsweise werden leichtflüchtige Monomere wie Ethylen, Butadien oder Vinylchlorid unter erhöhtem Druck polymerisiert. Natürlich ist es möglich, im Rahmen der radikalischen wäßrigen Emulsionshauptpolymerisation das Molekulargewicht regelnde Substanzen wie tert.-Dodecylmercaptan mitzuverwenden.

Üblicherweise werden im Rahmen der radikalischen wäßrigen Emulsionspolymerisation Dispergiermittel mitverwendet, die die Stabilität der erzeugten wäßrigen Polymerisatdispersion gewährleisten.

Als solche kommen sowohl die zur Durchführung von radikalischen wäßrigen Emulsionspolymerisationen üblicherweise eingesetzten Schutzkolloide als auch Emulgatoren in Betracht.

Geeignete Schutzkolloide sind beispielsweise Polyvinylalkohole, Cellulosederivate oder Vinylpyrrolidon enthaltende Copolymerisat. Eine ausführliche Beschreibung weiterer geeigneter Schutzkolloide findet sich in Houben-Weyl, Methoden der organischen Chemie, Band XIV/1, Makromolekulare Stoffe, Georg-Thieme-Verlag, Stuttgart, 1961, S. 411 bis 420. Selbstverständlich können auch Gemische aus Emulgatoren und/oder Schutzkolloiden verwendet werden. Vorzugsweise werden als Dispergiermittel ausschließlich Emulgatoren eingesetzt, deren relative Molekulargewichte im Unterschied zu den Schutzkolloiden üblicherweise unter 1000 liegen. Sie können sowohl anionischer, kationischer oder nichtionischer Natur sein. Selbstverständlich müssen im Falle der Verwendung von Gemischen grenzflächenaktiver Substanzen die Einzelkomponenten miteinander verträglich sein, was im Zweifelsfall an Hand weniger Vorversuche überprüft werden kann. Im allgemeinen sind anionische Emulgatoren untereinander und mit nicht-ionischen Emulgatoren verträglich. Desgleichen gilt auch für kationische Emulgatoren, während anionische und kationische Emulgatoren meistens miteinander unverträglich sind. Gebräuchliche Emulgatoren sind z.B. ethoxylierte Mono-, Di- und Tri-Alkylphenole (EO-Grad: 3 bis 50, Alkylrest: C₄ bis C₉), ethoxylierte Fettalkohole (EO-Grad: 3 bis 50, Alkylrest: C₈ bis C₃₆), sowie Alkali- und Ammoniumsalze von Alkylsulfaten (Alkylrest: C₈ bis C₁₂), von Schwefelsäurehalbestern ethoxylierter Alkanole (EO-Grad: 4 bis 30, Alkylrest: C₁₂ bis C₁₈) und ethoxylierter Alkylphenole (EO-Grad: 3 bis 50, Alkylrest: C₄ bis C₉), von Alkylsulfonsäuren (Alkylrest: C₁₂ bis C₁₈) und von Alkylarylsulfonsäuren (Alkylrest: C₉ bis C₁₈). Weitere geeignete Emulgatoren finden sich in Houben-Weyl, Methoden der organischen Chemie, Band XIV/1, Makromolekulare Stoffe, Georg-Thieme Verlag, Stuttgart, 1961, Seiten 192 bis 208.

Als geeignete grenzflächenaktive Substanzen haben sich ferner Verbindungen der allgemeinen Formel I 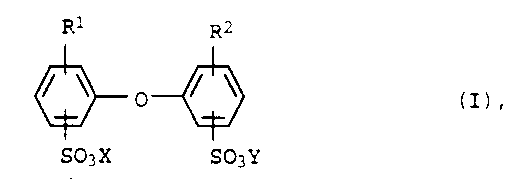 worin R¹ und R² Wasserstoff oder C₄- bis C₂₄-Alkyl bedeuten und nicht gleichzeitig Wasserstoff sind, und X und Y Alkalimetallionen und/oder Ammoniumionen sein können, erwiesen. In der Formel I bedeuten R¹ und R² bevorzugt lineare oder verzweigte Alkylreste mit 6 bis 18 C-Atomen oder Wasserstoff, und insbesondere mit 6,12 und 16 C-Atomen, wobei R¹ und R² nicht beide gleichzeitig Wasserstoff sind. X und Y sind bevorzugt Natrium, Kalium oder Ammoniumionen, wobei Natrium besonders bevorzugt ist. Besonders vorteilhaft sind Verbindungen I in denen X und Y Natrium, R¹ ein verzweigter Alkylrest mit 12 C-Atomen und R² Wasserstoff oder R¹ ist. Häufig werden technische Gemische verwendet, die einen Anteil von 50 bis 90 Gew.-% des monoalkylierten Produktes aufweisen, beispielsweise Dowfax® 2A1 (Warenzeichen der Dow Chemical Company). Vorzugsweise werden die Verbindungen I im erfindungsgemäßen Verfahren für sich und besonders bevorzugt im Gemisch mit ethoxylierten Fettalkoholen (EO-Grad: 3 bis 50, Alkylrest: C₈- bis C₃₆) als Dispergiermittel eingesetzt. Die Verbindungen I sind allgemein bekannt, z.B. aus der US-A 4,269,749, und im Handel erhältlich.

In der Regel beträgt die Menge an eingesetztem Dispergiermittel 1 bis 3 Gew.-% bezogen auf die radikalisch zu polymerisierenden Monomeren.

Selbstverständlich eignen sich die vorgenannten Dispergiermittel ganz generell zur Stabilisierung der erfindungsgemäßen unmittelbaren Verfahrensprodukte. Die erfindungsgemäßen unmittelbaren Verfahrensprodukte umfassen aber auch wäßrige Polymerisatdispersionen von selbstemulgierenden Polymerisaten, d.h. von Polymerisaten die ionische Gruppen aufweisen, die aufgrund der Abstoßung von Ladungen gleichen Vorzeichens die Stabilisierung zu bewirken vermögen. Bevorzugt weisen die erfindungsgemäßen unmittelbaren Verfahrensprodukte anionische Stabilisierung (insbesondere anionische Dispergiermittel) auf.

Erfolgt die Herstellung derjenigen wäßrigen Polymerisatdispersion, deren Restmonomerengehalt in der erfindungsgemäßen Weise gesenkt werden soll, nach der Methode der radikalischen wäßrigen Emulsionspolymerisation aus Monomerenzusammensetzungen von wenigstens eine ethylenisch ungesättigte Gruppe aufweisenden Monomeren, sind im Hinblick auf das erfindungsgemäße Verfahren insbesondere Monomerenzusammensetzungen von Bedeutung, die wenigstens zwei voneinander verschiedene wenigstens eine ethylenisch ungesättigte Gruppe aufweisende Monomeren umfassen und im übrigen
- 70 bis 99,9 Gew.-% Ester der Acryl- und/oder Methacrylsäure mit 1 bis 12 C-Atome aufweisenden Alkanolen und/oder Styrol,
   oder
- 70 bis 99,9 Gew.-% Styrol und/oder Butadien,
   oder
- 70 bis 99,9 Gew.-% Vinylchlorid und/oder Vinylidenchlorid,
   oder
- 40 bis 99,9 Gew.-% Vinylacetat, Vinylpropionat und/oder Ethylen
enthalten.

Besonders relevant sind im Hinblick auf das erfindungsgemäße Verfahren Monomerenzusammensetzungen, die umfassen:
- 0,1 bis 5 Gew.-%: wenigstens einer 3 bis 6 C-Atome aufweisenden α,β-monoethylenisch ungesättigten Carbonsäure und/oder deren Amid (Monomere A) und
- 70 bis 99,9 Gew.-%: an Estern der Acryl- und/oder Methacrylsäure mit 1 bis 12 C-Atome aufweisenden Alkanolen und/oder Styrol (Monomere B),
oder
- 0,1 bis 5 Gew.-%: wenigstens einer 3 bis 6 C-Atome aufweisenden α,β-monoethylenisch ungesättigten Carbonsäure und/oder deren Amid (Monomere A) und
- 70 bis 99,9 Gew.-%: Styrol und/oder Butadien (Monomere B'),
oder
- 0,1 bis 5 Gew.-%: wenigstens einer 3 bis 6 C-Atome aufweisenden α,β-monoethylenisch ungesättigten Carbonsäure und/oder deren Amid (Monomere A) und
- 70 bis 99,9 Gew.-%: Vinylchlorid und/oder Vinylidenchlorid (Monomere B"),
oder
- 0,1 bis 5 Gew.-%: wenigstens einer 3 bis 6 C-Atome aufweisenden α,β-monoethylenisch ungesättigten Carbonsäure und/oder deren Amid (Monomere A) und
- 40 bis 99,9 Gew.-%: Vinylacetat, Vinylpropionat und/oder Ethylen (B"').

Von ganz besonderer Relevanz ist das erfindungsgemäße Verfahren im Fall der vorgenannten Monomerenzusammensetzungen dann, wenn das Monomere A Acrylsäure ist.

Darüber hinaus ist das erfindungsgemäße Verfahren empfehlenswert im Fall von radikalischen wäßrigen Emulsionspolymerisationen von Monomerenzusammensetzungen die umfassen:
- 0,1 bis 30 Gew.-%: Acrylnitril (vorzugsweise 0,5 bis 15 Gew.-%) und
- 70 bis 99,9 Gew.-%: Ester der Acryl- und/oder Methacrylsäure mit 1 bis 12 C-Atome aufweisenden Alkanolen und/ oder Styrol,
oder
- 0,1 bis 30 Gew.-%: Acrylnitril (vorzugsweise 0,5 bis 15 Gew.-%) und
- 70 bis 99,9 Gew.-%: Styrol und/oder Butadien,
oder
- 0,1 bis 40 Gew.-%: Vinylacetat und/oder Vinylpropionat und
- 60 bis 99,9 Gew.-%: Ester der Acryl- und/oder Methacrylsäure mit 1 bis 12 C-Atome aufweisenden Alkanolen und/ oder Styrol.

Ganz besonders empfehlenswert ist das erfindungsgemäße Verfahren jedoch im Fall von radikalischen wäßrigen Emulsionspolymerisationen von Monomerenzusammensetzungen die umfassen:
- 0,1 bis 5 Gew.-%: wenigstens einer 3 bis 6 C-Atome aufweisenden α,β-monoethylenisch ungesättigten Carbonsäure und/oder deren Amid, insbesondere Acrylsäure,
- 0,1 bis 30 Gew.-%: Acrylnitril (vorzugsweise 0,5 bis 15 Gew.-%) und
- 69,9 bis 99,9 Gew.-%: Ester der Acryl- und/oder Methacrylsäure mit 1 bis 12 C-Atome aufweisenden Alkanolen und/ oder Styrol
oder
- 0,1 bis 5 Gew.-%: wenigstens einer 3 bis 6 C-Atome aufweisenden α,β-monoethylenisch ungesättigten Carbonsäure und/oder deren Amid, insbesondere Acrylsäure,
- 0,1 bis 30 Gew.-%: Acrylnitril (vorzugsweise 0,5 bis 15 Gew.-%) und
- 69,9 bis 99,9 Gew.-%: Styrol und/oder Butadien,
oder
- 0,1 bis 5 Gew.-%: wenigstens einer 3 bis 6 C-Atome aufweisenden α,β-monoethylenisch ungesättigten Carbonsäure und/oder deren Amide, insbesondere Acrylsäure,
- 0,1 bis 40 Gew.-%: Vinylacetat und/oder Vinylpropionat und
- 59,9 bis 99,9 Gew.-%: Ester der Acryl- und/oder Methacrylsäure mit 1 bis 12 C-Atome aufweisenden Alkanolen und/ oder Styrol.

Vorzugsweise werden die vorgenannten Monomerenzusammensetzungen so gewählt, daß die Tg-Werte der resultierenden dispergierten Polymerisate unterhalb 50°C, vorzugsweise unterhalb 25°C und ganz besonders bevorzugt unterhalb 0°C (bis zu -70°C) liegen. Selbstverständlich kann der Tg-Wert aber auch oberhalb von 50°C oder oberhalb von 100°C liegen.

Im Fall von Restmonomere enthaltenden wäßrigen Polymerisatdispersionen, deren dispergiertes Polymerisat aus wenigstens eine ethylenisch ungesättigte Gruppe aufweisenden Monomeren nach der radikalischen wäßrigen Emulsionspolymerisation erzeugt wird, wird man in der Regel bereits im Rahmen dieser radikalischen wäßrigen Emulsionshauptpolymerisation die 1 Gew.-%-Grenze an auf die gesamte wäßrige Dispersion bezogenen Restmonomeren erreichen oder unterschreiten. In den Fällen, in denen dies nicht möglich ist, kann man, wie bereits erwähnt, das erfindungsgemäße Verfahren der Restmonomerenabsenkung entweder unmittelbar im Anschluß anwenden oder bis zum Erreichen der vorgenannten Grenze zunächst nach den an sich bekannten Methoden zur Restmonomerenverringerung des Standes der Technik verfahren, ehe man erfindungsgemäß weiterverfährt, um die Vorteile des erfindungsgemäßen Verfahrens zu nutzen. Generell können die Hauptpolyreaktion und der erfindungsgemäße Schritt der Restmonomerenabsenkung nahtlos ineinander übergehen. Auch kann das erfindungsgemäße radikalische Redoxinitiatorsystem bereits im Rahmen der Hauptpolyreaktion mitverwendet worden sein.

Das erfindungsgemäß als Reduktionsmittel mitzuverwendende Addukt eines niederen Ketons an das Hydrogensulfitanion bildet sich in wäßrigem Medium, das beide Verbindungen enthält, automatisch. Das Entstehen des Adduktes weist sich durch eine negative Wärmetönung (exotherm) aus. In der Regel gelingt es nicht, die Additionsverbindung aus dem wäßrigen Medium heraus in reiner Form zu isolieren. Üblicherweise setzt man als erfindungsgemäßes Reduktionsmittel daher wäßrige Lösungen ein, die das niedere Keton und eine geeignete Hydrogensulfitquelle enthalten. Als letztere können z.B. SO₂, Alkalimetallhydrogensulfite oder Alkalimetalldisulfit verwendet werden. Vorzugsweise werden NaHSO₃ und Na₂S₂O₅ verwendet. Aus letzterem bildet sich das Hydrogensulfit durch Hydrolyse. Zweckmäßigerweise wird man, bezogen auf die Stöchiometrie der Umsetzung (R', R" = organischer Rest) 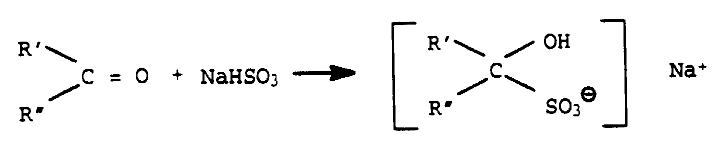 das in der Regel relativ leicht flüchtige Keton in einem 1,2- bis 1,5-fachen Überschuß einsetzen. Ein solcher Überschuß verschiebt einerseits die Lage des Gleichgewichtes zugunsten des erforderlichen Addukts und gewährleistet auch für den Fall, daß sich unter den Bedingungen der erfindungsgemäßen Nachpolymerisation ein Teil des Ketons verflüchtigt, einen in ausreichender Menge verbleibenden Adduktgehalt im wäßrigem System.

Als 3 bis 8, vorzugsweise 3 bis 5, Kohlenstoffatome aufweisende Ketone kommen sowohl aliphatische als auch cyclische Ketone wie z.B. Aceton, Methylethylketon, Diethylketon, Acetylaceton, Methylacetoacetat, Cyclohexanon, Acetol und 4-Hydroxy-4-methyl--2-pentanon in Betracht, unter denen Aceton, Methylethylketon und Diethylketon bevorzugt sind. Besonders bevorzugt ist Aceton. Charakteristisch und erfindungswesentlich für diese Ketone ist, daß sie bei 25°C eine Wasserlöslichkeit von wenigstens 1 Gramm pro 1000 Gramm Wasser aufweisen.

Selbstverständlich können die erfindungsgemäß anzuwendenden radikalischen Redoxinitiatoren neben den beschriebenen Addukten zusätzlich andere Reduktionsmittel wie reduzierende Zucker, z.B. Lactose und Fructose, Derivate derselben wie Ascorbinsäure oder Sulfinsäuren wie Hydroxymethansulfinsäure oder Alkylsulfinsäuren wie iso-Propylsulfinsäure umfassen. Vorzugsweise bilden die erfindungsgemäß mitzuverwendenden Addukte jedoch mehr als 25, besser mehr als 50, vorzugsweise mehr als 75 Gew.-% der Gesamtmenge an verwendeten Reduktionsmitteln und ganz besonders bevorzugt bilden sie das alleinige Reduktionsmittel.

Als oxidativer Bestandteil der erfindungsgemäß anzuwendenden radikalischen Redoxinitiatoren kommen z.B. molekularer Sauerstoff, Ozon, unter Radikalbildung Sauerstoff abgebende Mittel ohne Peroxidstruktur , wie Alkalimetallchlorate- und -perchlorate, Übergangsmetalloxidverbindungen wie Kaliumpermanganat, Mangandioxid und Bleioxid, aber auch Bleitetraacetat und Jodbenzol in Betracht. Vorzugsweise werden jedoch Peroxide oder Hydroperoxide oder deren Gemisch eingesetzt.

Als besonders wirksam haben sich dabei Wasserstoffperoxid, Peroxodischwefelsäure und ihre Salze, insbesondere ihre Alkalimetallsalze, Pinanhydroperoxid, tert.-Butylhydroperoxid, Dibenzoylperoxid und Cumolhydroperoxid erwiesen. Vorzugsweise wird ausschließlich tert.-Butylhydroperoxid verwendet.

Oxidationsmittel und Reduktionsmittel sollten in der Regel im Rahmen des erfindungsgemäßen Verfahrens in einem molaren Verhältnis von 0,1:1 bis 1:0,1, vorzugsweise 0,5:1 bis 1:0,5 und besonders bevorzugt 0,75:1 bis 1:0,75 angewendet werden. Vorzugsweise werden sie in äquivalenten Mengen eingesetzt.

Im Rahmen des erfindungsgemäßen Verfahrens kann das erfindungsgemäß zu verwendende radikalische Redoxinitiatorsystem der die Restmonomeren enthaltenden wäßrigen Polymerisatdispersion prinzipiell auf einmal zugesetzt werden. Mit Vorteil wird man jedoch höchstens das Oxidationsmittel auf einmal zusetzen und das Reduktionsmittel im Verlauf weniger Stunden kontinuierlich zuführen. Ganz besonders vorteilhaft ist es jedoch das Oxidationsmittel und das Reduktionsmittel der zu behandelnden wäßrigen Polymerisatdispersion im Verlauf weniger Stunden kontinuierlich über getrennte Zuläufe zuzuführen. In der Regel werden beide Zuläufe im wesentlichen zeitgleich beginnen und enden, d.h. im wesentlichen wird die Zufuhr synchron erfolgen. Zweckmäßigerweise erfolgt die Zufuhr in Form wäßriger Lösungen.

Die anzuwendenden Mengen des erfindungsgemäß einzusetzenden radikalischen Redoxinitiatorsystems hängen selbstredend von der noch vorhandenen Menge an Restmonomeren und deren gewünschtem Verringerungsgrad ab.

In der Regel wird sich die einzusetzende Menge auf 0,01 bis 5 Gew.-%, mit Vorteil auf 0,1 bis 1 Gew.-%, bezogen auf das dispergierte Polymerisat, belaufen. Natürlich ist es möglich im Anschluß an das erfindungsgemäße Verfahren andere Verfahren zur Restmonomerenabsenkung anzuschließen.

Bemerkenswerterweise ist es im Fall der erfindungsgemäßen Restmonomerenverringerung nicht erforderlich, das erfindungsgemäße Redoxinitiatorsystem im Beisein einer im wäßrigen Reaktionsmedium löslichen Metallverbindung, deren metallische Komponente (z.B. Eisen, Vanadin oder deren Gemisch) in mehreren Wertigkeitsstufen auftreten kann, anzuwenden. Selbstverständlich ist aber auch eine Anwendung in einem solchen Beisein möglich. In der Regel erfolgt diese dann in auf das Oxidations- oder Reduktionsmittel (die jeweilige Unterschußkomponente) bezogenen Mengen von 0,01 bis 1 Gew.-%, gerechnet als zuzusetzende Metallverbindung. Als solche kommen beispielsweise Eisen(II)sulfat, Eisen(II)chlorid, Eisen(II)nitrat, Eisen(II)acetat sowie die entsprechenden Eisen(III)salze, Ammonium- oder Alkalimetallvanadate (V(V)), Vanadium(III)chlorid,Vanadyl(V)trichlorid und insbesondere Vanadyl(IV)sulfat-Pentahydrat in Betracht. Häufig werden noch Komplexbildner zugesetzt, die die Metalle unter Reaktionsbedingungen in Lösung halten. Wie die Verfahren der radikalischen Polymerisation generell, kann auch das erfindungsgemäße Verfahren sowohl unter Inertgasatmosphäre (z.B. N₂, Ar) als auch unter Sauerstoff enthaltender Atmosphäre (z.B. Luft) angewendet werden.

Abschließend sei noch erwähnt, daß die erfindungsgemäß einzusetzenden radikalischen Redoxinitiatorsysteme eine wirksame Restmonomerenabsenkung in relativ kurzer Zeit ermöglichen. Ferner ist von Bedeutung, daß das erfindungsgemäß als Reduktionsmittel zu verwendende Addukt in der Regel wäßrigen Polymerisatdispersionen als Konservierungsmittel zuzusetzende Mikrocide in vorteilhafter Weise nicht zu reduzieren vermag, weshalb eine Anwendung desselben im Überschuß die diesbezügliche Qualität der wäßrigen Polymerisatdispersion nicht mindert. Die in den nachfolgenden Ausführungsbeispielen ermittelten Restmonomerengehalte gehen mit Ausnahme der Bestimmung des Acrylsäuregehaltes auf gaschromatographische Bestimmungen zurück.

Die Ermittlung der Acrylsäuregehalte erfolge bei isokratischer Elution mittels Puffer pH-stabilisiertem wäßrigem Medium und unter Anwendung von Säulenrückspülung zur Regeneration der Säule in Anwendung der Reversed Phase High Pressure Liquid Chromatographie mit UV-Detektion, wobei die zu untersuchende wäßrige Polymerisatdispersion mittels Wasser verdünnt und die Hauptmenge des Polymerisats durch BaCL₂/H₂SO₄ oder Carrez-Fallung gefällt wurde. Untersucht wurde der flüssige Überstand einer Probe, wobei die Validierung der Vorgehensweise nach der Aufstockmethode gesichert wurde.

### Beispiele und Vergleichsbeispiele

### Beispiel A

Ein Monomerengemisch bestehend aus 50 Gew.-% Styrol, 48 Gew.-% Butadien, 1,5 Gew.-% Acrylsäure und 0,5 Gew.-% Itaconsäure wurde wie folgt (unter Stickstoffatmosphäre) nach der Methode der radikalischen wäßrigen Emulsionspolymerisation polymerisiert:

Ein Gemisch aus 264 g Wasser, 216 g einer feinteiligen wäßrigen Polystyrolsaatdispersion eines Feststoffgehaltes von 36 Gew.-% und 2,5 g Itaconsäure wurde in einem Polymerisationsgefäß vorgelegt und auf 85°C erhitzt. Anschließend wurde auf einmal ein Gemisch aus 18,5 g Wasser und 1,5 g Ammoniumperoxodisulfat zugesetzt. Danach wurden zeitgleich beginnend unter Aufrechterhaltung der Polymerisationstemperatur von 85°C die Zuläufe I, II und III innerhalb von 6 h kontinuierlich zugeführt.

| | |
|---|---|
| Zulauf I | 249 g Styrol |
| | 239 g Butadien |
| | 8,5 g tert. Dodecylmercaptan |

| | |
|---|---|
| Zulauf II | 97 g Wasser |
| | 1 g Natriumpyrophosphat (pH-Puffer) |
| | 7,7 g Acrylsäure |
| | 10,84g Natriumsalz des Schwefelsäurehalbesters von ethoxyliertem Laurylalkohol (2EO) |

| | |
|---|---|
| Zulauf III | 18,4 g Wasser |
| | 1,5 g Ammoniumperoxodisulfat |

Anschließend wurde noch 1 h bei 85°C gerührt. Die resultierende wäßrige Polymerisatdispersion wies einen auf sie bezogenen Gesamtrestmonomerengehalt von 1,47 Gew.-% auf. Davon entfielen auf das im wesentlichen in Wasser unlösliche (Löslichkeit = 0,07 Gew.-% bei 25°C, 1 bar) Styrol 4700 mg/kg Dispersion und auf die mit Wasser bei 25°C und 1 bar in jedem Verhältnis mischbare Acrylsäure 700 mg/kg Dispersion.

Mittels wäßriger Natronlauge wurde die vorgenannte Restmonomeren enthaltende wäßrige Polymerisatdispersion auf einen pH-Wert von ca. 7 neutralisiert und anschließend wurden bei einer Temperatur von 55°C die Zuläufe IV und V zeitgleich beginnend innerhalb von 2 h kontinuierlich zugeführt. Nach beendeter Zufuhr wurde noch 1 h bei 55°C gerührt. Während aller Verfahrensschritte wurde die N₂-Atmosphäre beibehalten.

| | |
|---|---|
| Zulauf IV | 8,6 g Wasser |
| | 1,4 g tert.-Butylhydroperoxid |

| | |
|---|---|
| Zulauf V | 11,5 g Wasser |
| | 1 g Natriumdisulfit (Na₂S₂O₅) |
| | 0,65 g Aceton |

Nach Beendigung des erfindungsgemäßen Verfahrens wies die wäßrige Polymerisatdispersion einen auf sie bezogenen Gesamtrestmonomerengehalt von weit unter 1 Gew.-% auf.

Davon entfielen
auf Styrol 860 mg/kg Dispersion und
auf Acrylsäure 100 mg/kg Dispersion.

Ließ man in Zulauf V das Aceton weg und verfuhr ansonsten gleich, entfielen
auf Styrol 2100 mg/kg Dispersion und
auf Acrylsäure 700 mg/kg Dispersion.

### Beispiel B

Wie Beispiel A (die Nachpolymerisation erfolgte jedoch unter Luftatmosphäre), Zulauf IV enthielt jedoch 2,1 g tert.-Butylhydroperoxid gelöst und Zulauf V enthielt 1,5 g Natriumdisulfit sowie 0,98 g Aceton. Von dem auf die wäßrige Polymerisatdispersion bezogen weit unter 1 Gew.-% liegenden resultierenden Gesamtrestmonomerengehalt entfielen auf

| | |
|---|---|
| Styrol | 170 mg/kg Dispersion und auf |
| Acrylsäure | 20 mg/kg Dispersion. |

### Beispiel C

Wie Beispiel A, Zulauf IV enthielt jedoch 2,8 g tert.-Butylhydroperoxid gelöst und Zulauf V enthielt 2 g Natriumdisulfit sowie 1,3 g Aceton. Von dem auf die wäßrige Polymerisatdispersion bezogen weit unter 1 Gew.% liegenden resultierenden Gesamtrestmonomerengehalt entfielen auf

| | |
|---|---|
| Styrol | 75 mg/kg Dispersion und auf |
| Acrylsäure | < 10 mg/kg Dispersion. |

Die Qualität der resultierenden wäßrigen Polymerisatdispersion war nicht beeinträchtigt.

### Vergleichsbeispiel A

Die in Beispiel A nach Durchführung der erfindungsgemäßen Restmonomerenabsenkung erhaltene wäßrige Polymerisatdispersion wurde in an sich bekannter Weise mittels Wasserdampf gestrippt, wobei der Styrolgehalt von 860 mg/kg Dispersion auf 115 mg/kg Dispersion sank, während der Acrylsäuregehalt innerhalb der Meßgenauigkeit unverändert bei 100 mg/kg Dispersion stehen blieb.

### Beispiel D

Beispiel A wurde wiederholt, die Restmonomerenreduktion wurde jedoch ohne vorherige Neutralisation mittels wäßriger Natronlauge vorgenommen. Der pH-Wert des wäßrigen Dispergiermediums lag bei etwa 4. Im Ergebnis wurden nachfolgende Restmonomerengehalte erhalten:

| | |
|---|---|
| Styrol | 417 mg/kg Dispersion |
| Acrylsäure | 52 mg/kg Dispersion |

Obwohl die wäßrige Polymerisation mittels eines anionischen Emulgators stabilisiert wurde, dessen stabilisierende Wirkung bei pH-Werten < 7 gemindert ist, ging mit der Anwendung des erfindungsgemäßen Verfahrens zur Restmonomerenreduktion keine Minderung der Qualität der Dispersion einher, insbesondere kam es nicht zur Bildung von Mikroflockungen (Stippen).

Ließ man in Zulauf V das Aceton weg und verfuhr ansonsten gleich, entfielen
auf Styrol 1560 mg/kg Dispersion und
auf Acrylsäure 550 mg/kg Dispersion.

### Vergleichsbeispiel B

Wie Beispiel D, Zulauf V enthielt jedoch anstelle des erfindungsgemäßen Adduktes eine äquimolare Menge des Natriumsalzes der Hydroxymethansulfinsäure gelöst. Im Ergebnis wurden nachfolgende Restmonomerengehalte erhalten:

| | |
|---|---|
| Styrol | 560 mg/kg Dispersion |
| Acrylsäure | 645 mg/kg Dispersion |

Über eine Erhöhung der Wirkstoffgehalte in Zulauf V und IV konnte keine wesentlich weitergehende Absenkung des Acrylsäuregehaltes erreicht werden. Gleichzeitig trat jedoch eine Verschlechterung der Qualität der wäßrigen Polymerisatdispersion infolge Stippenbildung ein.

### Beispiel E

Beispiel A wurde wiederholt, 4 Gew.-% an Styrol wurden jedoch durch 4 Gew.-% an Acrylnitril ersetzt. Im Ergebnis wurden nachfolgende Restmonomerengehalte erhalten:

| | |
|---|---|
| Styrol | 824 mg/kg Dispersion |
| Acrylsäure | 59 mg/kg Dispersion |

### Beispiel F

Wie Beispiel A, Zulauf III enthielt jedoch 3 g Ammoniumperoxodisulfat. Nach Beendigung der wäßrigen radikalischen Emulsionshauptpolymerisation betrug der auf die wäßrige Polymerisatdispersion bezogene Restmonomerengesamtgehalt 1,17 Gew.-%.

Davon entfielen auf

| | |
|---|---|
| Styrol | 3900 mg/kg Dispersion |
| Acrylsäure | 500 mg/kg Dispersion. |

Nach Beendigung der erfindungsgemäßen Nachpolymerisation lag der Gesamtrestmonomerengehalt weit unter 1 Gew.-%, bezogen auf die wäßrige Polymerisatdispersion, davon entfielen auf

| | |
|---|---|
| Styrol | 360 mg/kg Dispersion |
| Acrylsäure | 39 mg/kg Dispersion. |

### Beispiel G

Wie Beispiel F, Zulauf IV enthielt jedoch 2,8 g tert.-Butylhydroperoxid und Zulauf V enthielt 2 g Natriumdisulfit und 1,3 g Aceton. Die resultierenden Restmonomerengehalte betrugen

| | |
|---|---|
| Styrol | 55 mg/kg Dispersion |
| Acrylsäure | < 10 mg/kg Dispersion. |

### Beispiel H

Wie Beispiel F, Zulauf IV enthielt jedoch 3,5 g tert.-Butylhydroperoxid und Zulauf V enthielt 2,5 g Natriumdisulfit und 1,6 g Aceton. Die resultierenden Restmonomerengehalte betrugen

| | |
|---|---|
| Styrol | 19 mg/kg Dispersion |
| Acrylsäure | << 10 mg/kg Dispersion. |

### Beispiel I

Wie in Beispiel D, mit dem Unterschied, daß die Temperatur zur Nachpolymerisation 85°C betrug und Zulauf IV nicht 1,4 g tert-Butylhydroperoxid sondern 1,39 g Ammoniumperoxodisulfat und Zulauf V lediglich 0,5 g Natriumdisulfit und 0,33 g Aceton enthielt.

Die resultierenden Restmonomerengehalte lauteten:

| | |
|---|---|
| Styrol | 1005 mg/kg Dispersion |
| Acrylsäure | 56 mg/kg Dispersion |

### Beispiel J

Ein Monomerengemisch bestehend aus 49,1 Gew.-% n-Butylacrylat, 49,1 Gew.-% Vinylacetat und 1,8 Gew.-% Acrylsäure wurde gemäß der Herstellvorschrift in "Methoden der organischen Chemie (Houben-Weyl), Bd. XIV/1, Makromolekulare Stoffe, Teil 1, Georg Thieme Verlag Stuttgart (1961), S. 186 (Herstellung von Acronal® 500 D)" nach der Methode der radikalischen wäßrigen Emulsionspolymerisation unter Luftatmosphäre polymerisiert und nachbereitet. Nach der Abkühlung auf 35°C lag der Gesamtrestmonomerengehalt bei etwa 3,2 Gew.-% bezogen auf die wäßrige Polymerisatdispersion und der pH-Wert des wäßrigen Dispergiermediums betrug 3,5.

Davon entfielen auf das in Wasser im wesentlichen unlösliche (Löslichkeit= 0,14 Gew.-% bei 20°C, 1 bar) n-Butylacrylat 21500 mg/kg Dispersion und auf die mit Wasser bei 25°C und 1 bar in jedem Verhältnis mischbare Acrylsäure 965 mg/kg Dispersion.

Zu 500 g dieser wäßrigen Polymerisatdispersion wurden innerhalb von 2 h bei 55°C zeitgleich beginnend nachfolgende Zuläufe I und II kontinuierlich zugeführt:

| | |
|---|---|
| Zulauf I | 10 g Wasser |
| | 1,6 g tert.-Butylhydroperoxid |

| | |
|---|---|
| Zulauf II | 13,3 g Wasser |
| | 1,13 g Natriumdisulfit |
| | 0,73 g Aceton |

Nach beendeter Zufuhr wurde noch 1 h bei 55°C gerührt. Anschließend wies die wäßrige Polymerisatdispersion einen auf sie bezogenen Gesamtrestmonomerengehalt von weit unter 1 Gew.-% auf. Während aller Verfahrensschritte wurde die Luftatmosphäre beibehalten.

Davon entfielen
auf n-Butylacrylat 44 mg/kg Dispersion und
auf Acrylsäure < 10 mg/kg Dispersion.

Ließ man in Zulauf II das Aceton weg und verfuhr ansonsten gleich, entfielen
auf n-Butylacrylat 10500 mg/kg Dispersion und
auf Acrylsäure 800 mg/kg Dispersion.

### Beispiel K

Ein Monomerengemisch bestehend aus 14 Gew.-% Styrol, 69,2 Gew.-% n-Butylacrylat, 2,9 Gew.-% Acrylsäure und 13,9 Gew.-% Acrylnitril wurde wie folgt nach der Methode der radikalischen wäßrigen Emulsionspolymerisation (unter N₂-Atmosphäre) polymerisiert.

Ein Gemisch aus 144 g Wasser und 1,8 g Natriumlaurylsulfat wurde in einem Polymerisationsgefäß vorgelegt und auf 85°C erhitzt. Anschließend wurde auf einmal eine Lösung von 0,26 g Ammoniumperoxodisulfat in 5 g Wasser zugesetzt. Danach wurden zeitgleich beginnend unter Aufrechterhaltung der 85°C die Zuläufe I und II innerhalb von 6 h und Zulauf III innerhalb von 6,5 h kontinuierlich zugeführt.

| | |
|---|---|
| Zulauf I | 274 g Wasser |
| | 2,4 g Natriumpyrophosphat (pH-Puffer) |
| | 8,5 g Natriumlaurylsulfat |
| | 15,9 g Acrylsäure |
| | 74,3 g Styrol |
| | 366 g n-Butylacrylat |

| | |
|---|---|
| Zulauf II | 74 g Acrylnitril |

| | |
|---|---|
| Zulauf III | 45 g Wasser |
| | 2,4 g Ammoniumperoxodisulfat |

Anschließend wurde noch 1 h bei 85°C gerührt. Die resultierende wäßrige Polymerisatdispersion wies einen auf sie bezogenen Gesamtrestmonomerengehalt von < 1 Gew.-% auf. Davon entfielen auf n-Butylacrylat 5400 mg/kg Dispersion, auf Acrylsäure 800 mg/kg Dispersion, auf Styrol 100 mg/kg Dispersion und auf Acrylnitril (Löslichkeit in Wasser bei 20°C, 1 bar: 7,35 Gew.-%) 500 mg/kg Dispersion.

Vorgenannte wäßrige Polymerisatdispersion wurde auf 60°C temperiert und bei dieser Temperatur wurden innerhalb von 2 h die Zuläufe IV und V kontinuierlich zugeführt. Nach beendeter Zufuhr wurde noch 1 h bei 60°C gerührt. Wahrend aller Verfahrensschritte wurde die N₂-Atmosphäre beibehalten.

| | |
|---|---|
| Zulauf IV | 9,1 g Wasser |
| | 1,52 g tert.-Butylhydroperoxid |

| | |
|---|---|
| Zulauf V | 12,3 g Wasser |
| | 1 g Natriumdisulfit |
| | 0,66 g Aceton |

Nach Beendigung des erfindungsgemäßen Verfahrens wies die wäßrige Polymerisatdispersion einen auf sie bezogenen Gesamtrestmonomerengehalt von weit unter 1 Gew.-% auf. Davon entfielen auf

| | |
|---|---|
| n-Butylacrylat | 60 mg/kg Dispersion |
| Acrylsäure | < 10 mg/kg Dispersion |
| Acrylnitril | < 10 mg/kg Dispersion |
| Styrol | < 10 mg/kg Dispersion. |

Ließ man in Zulauf V das Aceton weg und verfuhr ansonsten gleich, entfielen auf

| | |
|---|---|
| n-Butylacrylat | 1200 mg/kg Dispersion |
| Acrylsäure | 600 mg/kg Dispersion |
| Acrylnitril | 250 mg/kg Dispersion |
| Styrol | 100 mg/kg Dispersion. |

In entsprechender Weise kann bei vorstehend ausgeführten Beispielen die Nachpolymerisation im Druckgefäß auch bei 80°C durchgeführt werden.

## Patentansprüche

1. Verfahren zur Herstellung einer wäßrigen Polymerisatdispersion, bei dem man eine wäßrige Dispersion eines Polymerisats, das wenigstens zwei voneinander verschiedene, wenigstens eine ethylenisch ungesättigte Gruppe aufweisende, Monomere A und B in chemisch gebundener Form eingebaut enthält, in an sich bekannter Weise so erzeugt, daß der Gesamtgehalt der wäßrigen Polymerisatdispersion an freien, d.h. nicht chemisch gebundenen, wenigstens eine ethylenisch ungesättigte Doppelbindung aufweisenden Monomeren, bezogen auf die wäßrige Polymerisatdispersion, im Bereich von > 0 bis ≤ 1 Gew.-% liegt und anschließend diesen Restmonomerengehalt durch Einwirkung eines wenigstens ein Oxidationsmittel und wenigstens ein Reduktionsmittel umfassenden radikalischen Redoxinitiatorsystems verringert, dadurch gekennzeichnet, daß das Redoxinitiatorsystem als Reduktionsmittel das Addukt eines Ketons, an dessen Aufbau 3 bis 8 C-Atome beteiligt sind, an das Hydrogensulfitanion und/oder die konjugierte Säure dieses Addukts umfaßt.

2. Verfahren nach Anspruch 1, dadurch gekennzeichnet, daß der zu verringernde Restmonomerengehalt > 0 bis ≤ 0,5 Gew.-% beträgt.

3. Verfahren nach Anspruch 1, dadurch gekennzeichnet, daß der zu verringernde Restmonomerengehalt > 0 bis ≤ 0,1 Gew.-% beträgt.

4. Verfahren nach Anspruch 1, dadurch gekennzeichnet, daß das dispergierte Polymerisat wenigstens drei voneinander verschiedene, wenigstens eine ethylenisch ungesättigte Gruppe aufweisende Monomere in chemisch gebundener Form eingebaut enthält.

5. Verfahren nach Anspruch 1, dadurch gekennzeichnet, daß das dispergierte Polymerisat wenigstens vier voneinander verschiedene, wenigstens eine ethylenisch ungesättigte Gruppe aufweisende Monomere in chemisch gebundener Form eingebaut enthält.

6. Verfahren nach Anspruch 1, dadurch gekennzeichnet, daß das dispergierte Polymerisat wenigstens fünf voneinander verschiedene, wenigstens eine ethylenisch ungesättigte Gruppe aufweisende Monomere in chemisch gebundener Form eingebaut enthält.

7. Verfahren nach Anspruch 1, dadurch gekennzeichnet, daß das dispergierte Polymerisat wenigstens sechs voneinander verschiedene, wenigstens eine ethylenisch ungesättigte Gruppe aufweisende Monomere in chemisch gebundener Form eingebaut enthält.

8. Verfahren nach Anspruch 1, dadurch gekennzeichnet, daß das Verhältnis L_{A}/L_{B} einen Wert > 1,1 aufweist, wobei L_{A} die bei 55°C und 1 bar zu ermittelnde molale Löslichkeit desjenigen Monomeren des zu verringernden Restmonomerengemisches mit der unter diesen Bedingungen höchsten molalen Löslichkeit in Wasser und L_{B} die entsprechende Löslichkeit desjenigen Monomeren des zu verringernden Restmonomerengemisches mit der unter diesen Bedingungen geringsten molalen Löslichkeit in Wasser meint.

9. Verfahren nach Anspruch 8, dadurch gekennzeichnet, daß L_{A}/L_{B} ≥ 1,5 beträgt.

10. Verfahren nach Anspruch 8, dadurch gekennzeichnet, daß L_{A}/L_{B} ≥ 5 beträgt.

11. Verfahren nach Anspruch 8, dadurch gekennzeichnet, daß L_{A}/L_{B} ≥ 10 beträgt.

12. Verfahren nach Anspruch 8, dadurch gekennzeichnet, daß L_{A}/L_{B} ≥ 50 beträgt.

13. Verfahren nach Anspruch 8, dadurch gekennzeichnet, daß L_{A}/L_{B} ≥ 100 beträgt.

14. Verfahren nach Anspruch 8, dadurch gekennzeichnet, daß L_{A}/L_{B} ≥ 1000 beträgt.

15. Verfahren nach Anspruch 8, dadurch gekennzeichnet, daß L_{A}/L_{B} ≥ 100.000 beträgt.

16. Verfahren nach Anspruch 1, dadurch gekennzeichnet, daß das zu verringernde Restmonomerengemisch wenigstens eines der Monomeren aus der Gruppe umfassend Styrol, Butadien, n-Butylacrylat und 2-Ethylhexylacrylat und wenigstens eines der Monomeren aus der Gruppe umfassend Acrylsäure, Methacrylsäure, Itaconsäure, Acrylamid und Methacrylamid beinhaltet.

17. Verfahren nach Anspruch 1, dadurch gekennzeichnet, daß das zu verringernde Restmonomerengemisch wenigstens eines der Monomeren aus der Gruppe umfassend Methylmethacrylat, Vinylacetat und Acrylnitril und wenigstens eines der Monomeren aus der Gruppe umfassend Acrylsäure, Methacrylsäure, Itaconsäure, Acrylamid und Methacrylamid beinhaltet.

18. Verfahren nach Anspruch 1, dadurch gekennzeichnet, daß das zu verringernde Restmonomerengemisch Acrylnitril umfaßt.

19. Verfahren nach Anspruch 1, dadurch gekennzeichnet, daß das zu verringernde Restmonomerengemisch Acrylsäure umfaßt.

20. Verfahren nach Anspruch 1, dadurch gekennzeichnet, daß das zu verringernde Restmonomerengemisch Acrylsäure und Acrylnitril umfaßt.

21. Verfahren nach Anspruch 1, dadurch gekennzeichnet, daß der Feststoffvolumengehalt der in an sich bekannter Weise erzeugten wäßrigen Polymerisatdispersion 10 bis 50 Vol.-% beträgt.

22. Verfahren nach Anspruch 1, dadurch gekennzeichnet, daß der Feststoffvolumengehalt der in an sich bekannter Weise erzeugten wäßrigen Polymerisatdispersion 20 bis 60 Vol.-% beträgt.

23. Verfahren nach Anspruch 1, dadurch gekennzeichnet, daß der Feststoffvolumengehalt der in an sich bekannter Weise erzeugten wäßrigen Polymerisatdispersion 30 bis 70 Vol.-% beträgt.

24. Verfahren nach Anspruch 1, dadurch gekennzeichnet, daß das dispergierte Polymerisat 0,1 bis 5 Gew.-% Acrylsäure chemisch gebunden eingebaut aufweist.

25. Verfahren nach Anspruch 1, dadurch gekennzeichnet, daß das dispergierte Polymerisat 0,1 bis 4 Gew.-% Acrylsäure chemisch gebunden eingebaut aufweist.

26. Verfahren nach Anspruch 1, dadurch gekennzeichnet, daß das dispergierte Polymerisat ≥ 5 bis 60 Gew.-% Acrylsäure chemisch gebunden eingebaut aufweist.

27. Verfahren nach Anspruch 1, dadurch gekennzeichnet, daß die Einwirkung des Redoxinitiatorsystems bei einem pH-Wert des wäßrigen Dispergiermediums von 2 bis < 7 erfolgt.

28. Verfahren nach Anspruch 1, dadurch gekennzeichnet, daß die Einwirkung des Redoxinitiatorsystems bei einem pH-Wert des wäßrigen Dispergiermediums von 2 bis 6 erfolgt.

29. Verfahren nach Anspruch 1, dadurch gekennzeichnet, daß die Einwirkung des Redoxinitiatorsystems bei einem pH-Wert des wäßrigen Dispergiermediums von 2 bis 5 erfolgt.

30. Verfahren nach Anspruch 1, dadurch gekennzeichnet, daß die Einwirkung des Redoxinitiatorsystems bei einer Temperatur von 20 bis 65°C erfolgt.

31. Verfahren nach Anspruch 1, dadurch gekennzeichnet, daß die in an sich bekannter Weise erzeugte wäßrige Polymerisatdispersion eine Sekundärdispersion ist.

32. Verfahren nach Anspruch 1, dadurch gekennzeichnet, daß die Herstellung des dispergierten Polymerisats der in an sich bekannter Weise erzeugten wäßrigen Polymerisatdispersion aus wenigstens eine ethylenisch ungesättigte Gruppe aufweisenden Monomeren nach der Methode der radikalischen wäßrigen Emulsionspolymerisation erfolgt.

33. Verfahren nach Anspruch 32, dadurch gekennzeichnet, daß die radikalische wäßrige Emulsionspolymerisation nach dem Zulaufverfahren durchgeführt wird.

34. Verfahren nach Anspruch 33, dadurch gekennzeichnet, daß 50 bis 100 Gew.-% der zu polymerisierenden Monomeren dem Polymerisationsgefäß ab Beginn der radikalischen wäßrigen Emulsionspolymerisation zugesetzt werden.

35. Verfahren nach Anspruch 33, dadurch gekennzeichnet, daß 80 bis 100 Gew.-% der zu polymerisierenden Monomeren dem Polymerisationsgefäß ab Beginn der radikalischen wäßrigen Emulsionspolymerisation zugesetzt werden.

36. Verfahren nach Anspruch 32, dadurch gekennzeichnet, daß die ab Beginn der radikalischen wäßrigen Emulsionspolymerisation dem Polymerisationsgefäß zuzusetzenden Monomeren kontinuierlich so zugeführt werden, daß zu jedem Zeitpunkt der Zufuhr wenigstens 80 Gew.-% der dem Polymerisationsgefäß bereits zuvor zugesetzten Monomeren einpolymerisiert sind.

37. Verfahren nach Anspruch 36, dadurch gekennzeichnet, daß zu jedem Zeitpunkt der kontinuierlichen Zufuhr wenigstens 90 Gew.-% der dem Polymerisationsgefäß bereits zuvor zugesetzten Monomeren einpolymerisiert sind.

38. Verfahren nach Anspruch 32, dadurch gekennzeichnet, daß das zur Herstellung des dispergierten Polymerisats verwendete radikalische Initiatorsystem Peroxodischwefelsäure und/oder deren Alkalimetallsalze und/oder deren Ammoniumsalze umfaßt.

39. Verfahren nach Anspruch 32, dadurch gekennzeichnet, daß zur Herstellung des dispergierten Polymerisats als radikalisches Initiatorsystem ausschließlich Peroxodischwefelsäure und/oder deren Alkalimetallsalze und/oder deren Ammoniumsalz verwendet wird.

40. Verfahren nach Anspruch 32, dadurch gekennzeichnet, daß zur Herstellung des dispergierten Polymerisats eine Polymerisationstemperatur von 70 bis 100°C angewendet wird.

41. Verfahren nach Anspruch 32, dadurch gekennzeichnet, daß zur Herstellung des dispergierten Polymerisats eine Polymerisationstemperatur von 80 bis 100°C angewendet wird.

42. Verfahren nach Anspruch 32, dadurch gekennzeichnet, daß die zur Herstellung des dispergierten Polymerisats zu polymerisierende Monomerenzusammensetzung wenigstens zwei voneinander verschiedene wenigstens eine ethylenisch ungesättigte Gruppe aufweisende Monomere umfaßt und im übrigen
- 70 bis 99,9 Gew.-% Ester der Acryl- und/oder Methacrylsäure mit 1 bis 12 C-Atome aufweisenden Alkanolen und/ oder Styrol,
oder
- 70 bis 99,9 Gew.-% Styrol und/oder Butadien,
oder
- 70 bis 99,9 Gew.-% Vinylchlorid und/oder Vinylidenchlorid,
oder
- 40 bis 99,9 Gew.-% Vinylacetat, Vinylpropionat und/oder Ethylen
enthält.

43. Verfahren nach Anspruch 32, dadurch gekennzeichnet, daß die zur Herstellung des dispergierten Polymerisats zu polymerisierende Monomerenzusammensetzung umfaßt:
0,1 bis 5 Gew.-% wenigstens einer 3 bis 6 C-Atome aufweisenden α,β-monoethylenisch ungesättigten Carbonsäure und/oder deren Amid (Monomere A) und
70 bis 99,9 Gew.-% an Estern der Acryl- und/oder Methacrylsäure mit 1 bis 12 C-Atome aufweisenden Alkanolen und/oder Styrol (Monomere B),
oder
0,1 bis 5 Gew.-% wenigstens einer 3 bis 6 C-Atome aufweisenden α,β-monoethylenisch ungesättigten Carbonsäure und/oder deren Amid (Monomere A) und
70 bis 99,9 Gew.-% Styrol und/oder Butadien (Monomere B'),
oder
0,1 bis 5 Gew.-% wenigstens einer 3 bis 6 C-Atome aufweisenden α,β-monoethylenisch ungesättigten Carbonsäure und/oder deren Amid (Monomere A) und
70 bis 99,9 Gew.-% Vinylchlorid und/oder Vinylidenchlorid (Monomere B"),
oder
0,1 bis 5 Gew.-% wenigstens einer 3 bis 6 C-Atome aufweisenden α,β-monoethylenisch ungesättigten Carbonsäure und/oder deren Amid (Monomere A) und
40 bis 99,9 Gew.-% Vinylacetat, Vinylpropionat und/oder Ethylen (B'").

44. Verfahren nach Anspruch 32, dadurch gekennzeichnet, daß die zur Herstellung des dispergierten Polymerisats zu polymerisierende Monomerenzusammensetzung umfaßt:
0,1 bis 30 Gew.-% Acrylnitril (vorzugsweise 0,5 bis 15 Gew.-%) und
70 bis 99,9 Gew.-% Ester der Acryl- und/oder Methacrylsäure mit 1 bis 12 C-Atome aufweisenden Alkanolen und/oder Styrol,
oder
0,1 bis 30 Gew.-% Acrylnitril (vorzugsweise 0,5 bis 15 Gew.-%) und
70 bis 99,9 Gew.-% Styrol und/oder Butadien,
oder
0,1 bis 40 Gew.-% Vinylacetat und/oder Vinylpropionat und
60 bis 99,9 Gew.-% Ester der Acryl- und/oder Methacrylsäure mit 1 bis 12 C-Atome aufweisenden Alkanolen und/oder Styrol
oder
0,1 bis 5 Gew.-% wenigstens einer 3 bis 6 C-Atome aufweisenden α,β-monoethylenisch ungesättigten Carbonsäure und/oder deren Amid, insbesondere Acrylsäure,
0,1 bis 30 Gew.-% Acrylnitril (vorzugsweise 0,5 bis 15 Gew.-%) und
69,9 bis 99,9 Gew.-% Ester der Acryl- und/oder Methacrylsäure mit 1 bis 12 C-Atome aufweisenden Alkanolen und/oder Styrol
oder
0,1 bis 5 Gew.-% wenigstens einer 3 bis 6 C-Atome aufweisenden α,β-monoethylenisch ungesättigten Carbonsäure und/oder deren Amid, insbesondere Acrylsäure,
0,1 bis 30 Gew.-% Acrylnitril (vorzugsweise 0,5 bis 15 Gew.-%) und
69,9 bis 99,9 Gew.-% Styrol und/oder Butadien,
oder
0,1 bis 5 Gew.-% wenigstens einer 3 bis 6 C-Atome aufweisenden α,β-monoethylenisch ungesättigten Carbonsäure und/oder deren Amid, insbesondere Acrylsäure,
0,1 bis 40 Gew.-% Vinylacetat und/oder Vinylpropionat und
59,9 bis 99,9 Gew.-% Ester der Acryl- und/oder Methacrylsäure mit 1 bis 12 C-Atome aufweisenden Alkanolen und/oder Styrol.

45. Verfahren nach Anspruch 1, dadurch gekennzeichnet, daß die ketonische Komponente des als Reduktionsmittel mitzuverwendenden Addukts 3 bis 5 C-Atome aufweist.

46. Verfahren nach Anspruch 1, dadurch gekennzeichnet, daß die ketonische Komponente des als Reduktionsmittel mitzuverwendenden Addukts Aceton, Diethylketon und/oder Methylethylketon ist.

47. Verfahren nach Anspruch 1, dadurch gekennzeichnet, daß die ketonische Komponente des als Reduktionsmittel mitzuverwendenden Addukts Aceton ist.

48. Verfahren nach Anspruch 1, dadurch gekennzeichnet, daß als Reduktionsmittel des radikalischen Redoxinitiatorsystems ausschließlich das Addukt eines 3 bis 8 C-Atome aufweisenden Ketons an das Hydrogensulfitanion und/oder dessen konjugierte Säure verwendet wird.

49. Verfahren nach Anspruch 1, dadurch gekennzeichnet, daß als Reduktionsmittel des radikalischen Redoxinitiatorsystems ausschließlich das Addukt von Aceton an das Hydrogensulfitanion und/oder dessen konjugierte Säure verwendet wird.

50. Verfahren nach Anspruch 1, dadurch gekennzeichnet, daß als Oxidationsmittel des radikalischen Redoxinitiatorsystems ein Peroxid und/oder ein Hydroperoxid mitverwendet wird.

51. Verfahren nach Anspruch 1, dadurch gekennzeichnet, daß als Oxidationsmittel des radikalischen Redoxinitiatorsystems Wasserstoffperoxid, Peroxodischwefelsäure, die Salze der Peroxodischwefelsäure, Pinanhydroperoxid, tert.-Butylhydroperoxid, Dibenzoylperoxid und/oder Cumolhydroperoxid mitverwendet werden.

52. Verfahren nach Anspruch 1, dadurch gekennzeichnet, daß als Oxidationsmittel des radikalischen Redoxinitiatorsystems tert.-Butylhydroperoxid mitverwendet wird.

53. Verfahren nach Anspruch 1, dadurch gekennzeichnet, daß das radikalische Redoxinitiatorsystem als Reduktionsmittel das Addukt von Aceton an das Hydrogensulfitanion und/oder dessen konjugierte Säure und als Oxidationsmittel tert.-Butylhydroperoxid enthält.

54. Verfahren nach Anspruch 1, dadurch gekennzeichnet, daß das radikalische Redoxinitiatorsystem als Reduktionsmittel ausschließlich das Addukt von Aceton an das Hydrogensulfitanion und/oder dessen konjugierte Säure und als Oxidationsmittel ausschließlich tert.-Butylhydroperoxid aufweist.

55. Verfahren nach Anspruch 1, dadurch gekennzeichnet, daß das radikalische Redoxinitiatorsystem auch eine im wäßrigen Reaktionsmedium lösliche Metallverbindung umfaßt, deren metallische Komponente in mehreren Wertigkeitsstufen auftreten kann.

56. Wäßrige Polymerisatdispersion, deren Polymerisat neben Acrylsäure noch wenigstens ein von Acrylsäure verschiedenes, wenigstens eine ethylenisch ungesättigte Gruppe aufweisendes Monomeres in chemisch gebundener Form eingebaut enthält und deren Acrylsäuregehalt unter 100 mg Acrylsäure pro kg wäßriger Dispersion beträgt.

57. Wäßrige Polymerisatdispersion nach Anspruch 56, deren Acrylsäuregehalt unter 50 mg Acrylsäure pro kg wäßriger Dispersion beträgt.

58. Wäßrige Polymerisatdispersion nach Anspruch 56, deren Acrylsäuregehalt unter 40 mg Acrylsäure pro kg wäßriger Dispersion beträgt.

59. Wäßrige Polymerisatdispersion nach Anspruch 56, deren Acrylsäuregehalt unter 25 mg pro kg wäßriger Dispersion beträgt.

60. Wäßrige Polymerisatdispersion nach Anspruch 56, deren Acrylsäuregehalt unter 10 mg pro kg wäßriger Dispersion beträgt.

61. Wäßrige Polymerisatdispersion nach Anspruch 56, deren Polymerisat 0,1 bis 5 Gew.-% Acrylsäure in chemisch gebundener Form eingebaut enthält.

62. Wäßrige Polymerisatdispersion nach Anspruch 56, deren Polymerisat 5 bis 60 Gew.-% Acrylsäure in chemisch gebundener Form eingebaut enthält.

63. Wäßrige Polymerisatdispersion nach Anspruch 56, deren Polymerisat neben Acrylsäure aus wenigstens einem, eine ethylenisch ungesättigte Gruppe aufweisenden Monomeren, aufgebaut ist.

64. Wäßrige Polymerisatdispersion nach Anspruch 56, deren Polymerisat neben Acrylsäure wenigstens eines der Monomeren aus der Gruppe umfassend Styrol, Butadien, n-Butylacrylat, 2-Ethylhexylacrylat, Methylmethacrylat, Vinylacetat und Acrylnitril in chemisch gebundener Form eingebaut enthält.

65. Wäßrige Polymerisatdispersion nach Anspruch 56, deren Feststoffvolumengehalt 10 bis 50 Vol-% beträgt.

66. Wäßrige Polymerisatdispersion nach Anspruch 56, deren Feststoffvolumengehalt 20 bis 60 Vol-% beträgt.

67. Wäßrige Polymerisatdispersion nach Anspruch 56, deren Feststoffvolumengehalt 30 bis 70 Vol-% beträgt.

68. Wäßrige Polymerisatdispersion nach Anspruch 56, deren wäßriges Dispergiermedium einen pH-Wert von 2 bis < 7 aufweist.

69. Wäßrige Polymerisatdispersion nach Anspruch 56, deren wäßriges Dispergiermedium einen pH-Wert von 2 bis 6 aufweist.

70. Wäßrige Polymerisatdispersion nach Anspruch 56, deren wäßriges Dispergiermedium einen pH-Wert von 2 bis 5 aufweist.

71. Wäßrige Polymerisatdispersion nach Anspruch 56, deren Polymerisat neben Acrylsäure, bezogen auf das Gewicht des Polymerisats, einpolymerisiert enthält:
- 70 bis 99,9 Gew.-% Ester der Acryl- und/oder Methacrylsäure mit 1 bis 12 C-Atome aufweisenden Alkanolen und/oder Styrol,
oder
- 70 bis 99,9 Gew.-% Styrol und/oder Butadien,
oder
- 70 bis 99,9 Gew.-% Vinylchlorid und/oder Vinylidenchlorid,
oder
- 40 bis 99,9 Gew.-% Vinylacetat, Vinylpropionat und/oder Ethylen.

72. Wäßrige Polymerisatdispersion, erhältlich nach einem Verfahren gemäß Anspruch 1.

73. Verwendung eines radikalischen Redoxinitiatorsystems, das als Reduktionsmittel das Addukt eines Ketons, an dessen Aufbau 3 bis 8 C-Atome beteiligt sind, an das Hydrogensulfitanion und/ oder die konjugierte Säure dieses Addukts umfaßt, zur Verringerung des > 0 bis ≤ 1 Gew.-%, bezogen auf die wäßrige Polymerisatdispersion, betragenden Gehalts einer wäßrigen Polymerisatdispersion an wenigstens zwei voneinander verschiedenen, wenigstens eine ethylenisch ungesättigte Doppelbindung aufweisenden freien, d.h. nicht chemisch gebundenen, Monomeren.

74. Verwendung nach Anspruch 73, mit der Maßgabe, daß wenigstens eines der zwei voneinander verschiedenen, wenigstens eine ethylenisch ungesättigte Doppelbindung aufweisenden freien Monomeren Acrylsäure ist.

## Claims

1. A process for the preparation of an aqueous polymer emulsion, in which an aqueous emulsion of a polymer which contains at least two monomers A and B which differ from one another, have at least one ethylenically unsaturated group and are incorporated in chemically bonded form is produced, in a manner known per se, so that the total content of monomers which are free, ie. not chemically bonded, and have at least one ethylenically unsaturated double bond in the aqueous polymer emulsion is from > 0 to ≤ 1 % by weight, based on the aqueous polymer emulsion, and this residual monomer content is then reduced by the action of a free radical redox initiator system comprising at least one oxidizing agent and at least one reducing agent, wherein the redox initiator system comprises, as the reducing agent, the adduct of a ketone of 3 to 8 carbon atoms with the bisulfite anion or the conjugated acid of this adduct.

2. A process as claimed in claim 1, wherein the residual monomer content to be reduced is from > 0 to ≤ 0.5 % by weight.

3. A process as claimed in claim 1, wherein the residual monomer content to be reduced is from > 0 to ≤ 0.1 % by weight.

4. A process as claimed in claim 1, wherein the dispersed polymer contains, incorporated in chemically bonded form, at least three monomers which differ from one another and have at least one ethylenically unsaturated group.

5. A process as claimed in claim 1, wherein the dispersed polymer contains, incorporated in chemically bonded form, at least four monomers which differ from one another and have at least one ethylenically unsaturated group.

6. A process as claimed in claim 1, wherein the dispersed polymer contains, incorporated in chemically bonded form, at least five monomers which differ from one another and have at least one ethylenically unsaturated group.

7. A process as claimed in claim 1, wherein the dispersed polymer contains, incorporated in chemically bonded form, at least six monomers which differ from one another and have at least one ethylenically unsaturated group.

8. A process as claimed in claim 1, wherein the ratio S_{A}/S_{B} is ≥ 1.1, where S_{A} is the molal solubility, to be determined at 55°C and 1 bar, of that monomer of the residual monomer mixture whose content is to be reduced which has the highest molal solubility in water under these conditions and S_{B} is the corresponding solubility of that monomer of the residual monomer mixture whose content is to be reduced which has the lowest molal solubility in water under these conditions.

9. A process as claimed in claim 8, wherein S_{A}/S_{B} is ≥ 1.5.

10. A process as claimed in claim 8, wherein S_{A}/S_{B} is ≥ 5.

11. A process as claimed in claim 8, wherein S_{A}/S_{B} is ≥ 10.

12. A process as claimed in claim 8, wherein S_{A}/S_{B} is ≥ 50.

13. A process as claimed in claim 8, wherein S_{A}/S_{B} is ≥ 100.

14. A process as claimed in claim 8, wherein S_{A}/S_{B} is ≥ 1000.

15. A process as claimed in claim 8, wherein S_{A}/S_{B} is ≥ 100,000.

16. A process as claimed in claim 1, wherein the residual monomer mixture whose content is to be reduced contains at least one of the monomers selected from the group consisting of styrene, butadiene, n-butyl acrylate and 2-ethylhexyl acrylate and at least one of the monomers selected from the group consisting of acrylic acid, methacrylic acid, itaconic acid, acrylamide and methacrylamide.

17. A process as claimed in claim 1, wherein the residual monomer mixture whose content is to be reduced contains at least one of the monomers selected from the group consisting of methyl methacrylate, vinyl acetate and acrylonitrile and at least one of the monomers selected from the group consisting of acrylic acid, methacrylic acid, itaconic acid, acrylamide and methacrylamide.

18. A process as claimed in claim 1, wherein the residual monomer mixture whose content is to be reduced comprises acrylonitrile.

19. A process as claimed in claim 1, wherein the residual monomer mixture whose content is to be reduced comprises acrylic acid.

20. A process as claimed in claim 1, wherein the residual monomer mixture whose content is to be reduced comprises acrylic acid and acrylonitrile.

21. A process as claimed in claim 1, wherein the solids volume content of the aqueous polymer emulsion produced in a manner known per se is from 10 to 50 % by volume.

22. A process as claimed in claim 1, wherein the solids volume content of the aqueous polymer emulsion produced in a manner known per se is from 20 to 60 % by volume.

23. A process as claimed in claim 1, wherein the solids volume content of the aqueous polymer emulsion produced in a manner known per se is from 30 to 70 % by volume.

24. A process as claimed in claim 1, wherein the dispersed polymer contains from 0.1 to 5 % by weight of acrylic acid incorporated in chemically bonded form.

25. A process as claimed in claim 1, wherein the dispersed polymer contains from 0.1 to 4 % by weight of acrylic acid incorporated in chemically bonded form.

26. A process as claimed in claim 1, wherein the dispersed polymer contains from ≥ 5 to 60 % by weight of acrylic acid incorporated in chemically bonded form.

27. A process as claimed in claim 1, wherein the redox initiator system acts at a pH of the aqueous dispersing medium of from 2 to < 7.

28. A process as claimed in claim 1, wherein the redox initiator system acts at a pH of the aqueous dispersing medium of from 2 to 6.

29. A process as claimed in claim 1, wherein the redox initiator system acts at a pH of the aqueous dispersing medium of from 2 to 5.

30. A process as claimed in claim 1, wherein the redox initiator system acts at from 20 to 65°C.

31. A process as claimed in claim 1, wherein the aqueous polymer emulsion produced in a manner known per se is a secondary emulsion.

32. A process as claimed in claim 1, wherein the preparation of the dispersed polymer of the aqueous polymer emulsion produced in a manner known per se and comprising at least one monomer having an ethylenically unsaturated group is carried out by the free radical aqueous emulsion polymerization method.

33. A process as claimed in claim 32, wherein the free radical aqueous emulsion polymerization is carried out by the feed method.

34. A process as claimed in claim 33, wherein from 50 to 100 % by weight of the monomers to be polymerized are added to the polymerization vessel from the beginning of the free radical aqueous emulsion polymerization.

35. A process as claimed in claim 33, wherein from 80 to 100 % by weight of the monomers to be polymerized are added to the polymerization vessel from the beginning of the free radical aqueous emulsion polymerization.

36. A process as claimed in claim 32, wherein the monomers to be added to the polymerization vessel from the beginning of the free radical aqueous emulsion polymerization are introduced continuously so that throughout the feed at least 80 % by weight of the monomers added beforehand to the polymerization vessel have been incorporated by polymerization.

37. A process as claimed in claim 36, wherein throughout the continuous feed at least 90 % by weight of the monomers which have been added beforehand to the polymerization vessel have been incorporated by polymerization.

38. A process as claimed in claim 32, wherein the free radical initiator system used for the preparation of the dispersed polymer comprises peroxodisulfuric acid or an alkali metal salt thereof or an ammonium salt thereof.

39. A process as claimed in claim 32, wherein exclusively peroxodisulfuric acid or an alkali metal salt thereof or the ammonium salt thereof is used as the free radical initiator system for the preparation of the dispersed polymer.

40. A process as claimed in claim 32, wherein a polymerization temperature of from 70 to 100°C is used for the preparation of the dispersed polymer.

41. A process as claimed in claim 32, wherein a polymerization temperature of from 80 to 100°C is used for the preparation of the dispersed polymer.

42. A process as claimed in claim 32, wherein the monomer composition to be polymerized for the preparation of the dispersed polymer comprises at least two monomers which differ from one another and have at least one ethylenically unsaturated group and furthermore contains
- from 70 to 99.9 % by weight of esters of acrylic or methacrylic acid of alkanols of 1 to 12 carbon atoms or styrene,
or
- from 70 to 99.9 % by weight of styrene or butadiene,
or
- from 70 to 99.9 % by weight of vinyl chloride or vinylidene chloride,
or
- from 40 to 99.9 % by weight of vinyl acetate, vinyl propionate or ethylene.

43. A process as claimed in claim 32, wherein the monomer composition to be polymerized for the preparation of the dispersed polymer comprises:
from 0.1 to 5 % by weight of at least one α,β-monoethylenically unsaturated carboxylic acid of 3 to 6 carbon atoms or the amide thereof (monomers A) and
from 70 to 99.9 % by weight of esters of acrylic or methacrylic acid with alkanols of 1 to 12 carbon atoms or styrene (monomers B),
or
from 0.1 to 5 % by weight of at least one α,β-monoethylenically unsaturated carboxylic acid of 3 to 6 carbon atoms or the amide thereof (monomers A) and
from 70 to 99.9 % by weight of styrene or butadiene (monomers B'),
or
from 0.1 to 5 % by weight of at least one α,β-monoethylenically unsaturated carboxylic acid of 3 to 6 carbon atoms or the amide thereof (monomers A) and
from 70 to 99.9 % by weight of vinyl chloride or vinylidene chloride (monomers B"),
or
from 0.1 to 5 % by weight of at least one α,β-monoethylenically unsaturated carboxylic acid of 3 to 6 carbon atoms or the amide thereof (monomers A) and
from 40 to 99.9 % by weight of vinyl acetate, vinyl propionate or ethylene (B"').

44. A process as claimed in claim 32, wherein the monomer composition to be polymerized for the preparation of the dispersed polymer comprises:
from 0.1 to 30, preferably from 0.5 to 15, % by weight of acrylonitrile and
from 70 to 99.9 % by weight of esters of acrylic or methacrylic acid with alkanols of 1 to 12 carbon atoms and/or styrene,
or
from 0.1 to 30, preferably from 0.5 to 15, % by weight of acrylonitrile and
from 70 to 99.9 % by weight of styrene or butadiene,
or
from 0.1 to 40 % by weight of vinyl acetate or vinyl propionate and
from 60 to 99.9 % by weight of esters of acrylic or methacrylic acid with alkanols of 1 to 12 carbon atoms or styrene,
or
from 0.1 to 5 % by weight of at least one α,β-monoethylenically unsaturated carboxylic acid of 3 to 6 carbon atoms or the amide thereof, in particular acrylic acid,
from 0.1 to 30, preferably from 0.5 to 15, % by weight of acrylonitrile and
from 69.9 to 99.9 % by weight of esters of acrylic or methacrylic acid with alkanols of 1 to 12 carbon atoms or styrene
or
from 0.1 to 5 % by weight of at least one α,β-monoethylenically unsaturated carboxylic acid of 3 to 6 carbon atoms or the amide thereof, in particular acrylic acid,
from 0.1 to 30, preferably from 0.5 to 15, % by weight of acrylonitrile and
from 69.9 to 99.9 % by weight of styrene or butadiene,
or
from 0.1 to 5 % by weight of at least one α,β-monoethylenically unsaturated carboxylic acid of 3 to 6 carbon atoms or the amide thereof, in particular acrylic acid,
from 0.1 to 40 % by weight of vinyl acetate or vinyl propionate and
from 59.9 to 99.9 % by weight of esters of acrylic or methacrylic acid with alkanols of 1 to 12 carbon atoms or styrene.

45. A process as claimed in claim 1, wherein the ketone component of the adduct concomitantly to be used as a reducing agent has 3 to 5 carbon atoms.

46. A process as claimed in claim 1, wherein the ketone component of the adduct concomitantly to be used as the reducing agent is acetone, diethyl ketone or methyl ethyl ketone.

47. A process as claimed in claim 1, wherein the ketone component of the adduct concomitantly to be used as the reducing agent is acetone.

48. A process as claimed in claim 1, wherein exclusively the adduct of a ketone of 3 to 8 carbon atoms with the bisulfite anion or the conjugated acid thereof is used as the reducing agent of the free radical redox initiator system.

49. A process as claimed in claim 1, wherein exclusively the adduct of acetone with the bisulfite anion or the conjugated acid thereof is used as the reducing agent of the free radical redox initiator system.

50. A process as claimed in claim 1, wherein a peroxide or a hydroperoxide is concomitantly used as the oxidizing agent of the free radical redox initiator system.

51. A process as claimed in claim 1, wherein hydrogen peroxide, peroxodisulfuric acid, a salt of peroxodisulfuric acid, pinane hydroperoxide, tert-butyl hydroperoxide, dibenzyl peroxide or cumyl hydroperoxide is concomitantly used as the oxidizing agent of the free radical redox initiator system.

52. A process as claimed in claim 1, wherein tert-butyl hydroperoxide is concomitantly used as an oxidizing agent of the free radical redox initiator system.

53. A process as claimed in claim 1, wherein the free radical redox initiator system contains the adduct of acetone with the bisulfite anion or the conjugated acid thereof as the reducing agent and tert-butyl hydroperoxide as the oxidizing agent.

54. A process as claimed in claim 1, wherein the free radical redox initiator system contains exclusively the adduct of acetone with the bisulfite anion or the conjugated acid thereof as the reducing agent and exclusively tert-butyl hydroperoxide as the oxidizing agent.

55. A process as claimed in claim 1, wherein the free radical redox initiator system also comprises a metal compound which is soluble in the aqueous reaction medium and whose metallic component may occur in a plurality of valency states.

56. An aqueous polymer emulsion whose polymer contains, in addition to acrylic acid and incorporated in chemically bonded form, at least one monomer which differs from acrylic acid and has at least one ethylenically unsaturated group, and whose acrylic acid content is less than 100 mg of acrylic acid per kg of aqueous emulsion.

57. An aqueous polymer emulsion as claimed in claim 56, whose acrylic acid content is less than 50 mg of acrylic acid per kg of aqueous emulsion.

58. An aqueous polymer emulsion as claimed in claim 56, whose acrylic acid content is less than 40 mg of acrylic acid per kg of aqueous emulsion.

59. An aqueous polymer emulsion as claimed in claim 56, whose acrylic acid content is less than 25 mg per kg of aqueous emulsion.

60. An aqueous polymer emulsion as claimed in claim 56, whose acrylic acid content is less than 10 mg per kg of aqueous emulsion.

61. An aqueous polymer emulsion as claimed in claim 56, whose polymer contains from 0.1 to 5 % by weight of acrylic acid incorporated in chemically bonded form.

62. An aqueous polymer emulsion as claimed in claim 56, whose polymer contains from 5 to 60 % by weight of acrylic acid incorporated in chemically bonded form.

63. An aqueous polymer emulsion as claimed in claim 56, whose polymer is composed of, in addition to acrylic acid, at least one monomer which has an ethylenically unsaturated group.

64. An aqueous polymer emulsion as claimed in claim 56, whose polymer contains, in addition to acrylic acid and incorporated in chemically bonded form, at least one of the monomers selected from the group consisting of styrene, butadiene, n-butyl acrylate, 2-ethylhexyl acrylate, methyl methacrylate, vinyl acetate and acrylonitrile.

65. An aqueous polymer emulsion as claimed in claim 56, whose solids volume content is from 10 to 50 % by volume.

66. An aqueous polymer emulsion as claimed in claim 56, whose solids volume content is from 20 to 60 % by volume.

67. An aqueous polymer emulsion as claimed in claim 56, whose solids volume content is from 30 to 70 % by volume.

68. An aqueous polymer emulsion as claimed in claim 56, whose aqueous dispersing medium has a pH of from 2 to < 7.

69. An aqueous polymer emulsion as claimed in claim 56, whose aqueous dispersing medium has a pH of from 2 to 6.

70. An aqueous polymer emulsion as claimed in claim 56, whose aqueous dispersing medium has a pH of from 2 to 5.

71. An aqueous polymer emulsion as claimed in claim 56, whose polymer contains, in addition to acrylic acid,
- from 70 to 99.9 % by weight of esters of acrylic or methacrylic acid with alkanols of 1 to 12 carbon atoms or styrene,
or
- from 70 to 99.9 % by weight of styrene or butadiene,
or
- from 70 to 99.9 % by weight of vinyl chloride or vinylidene chloride,
or
- from 40 to 99.9 % by weight of vinyl acetate, vinyl propionate or ethylene,
the percentages being based on the weight of the polymer.

72. An aqueous polymer emulsion obtainable by a process as claimed in claim 1.

73. Use of a free radical redox initiator system which comprises, as the reducing agent, the adduct of a ketone of 3 to 8 carbon atoms with the bisulfite anion of or the conjugated acid of this adduct, for reducing the content, in an aqueous poly; mer emulsion, of from > 0 to ≤ 1 % by weight, based on the aqueous polymer emulsion, of at least two monomers which differ from one another, have at least one ethylenically unsaturated double bond and are free, ie. not chemically bonded.

74. Use as claimed in claim 73, with the proviso that at least one of the two free monomers which differ from one another and have at least one ethylenically unsaturated double bond is acrylic acid.

## Revendications

1. Procédé de préparation d'une dispersion aqueuse de polymère, dans lequel on produit de façon connue en soi une dispersion aqueuse d'un polymère contenant, sous forme chimiquement liée, au moins deux monomères A et B, différents l'un de l'autre, et comportant au moins un groupement à insaturation éthylénique, de telle sorte que la teneur totale de la dispersion aqueuse de polymère en monomères libres, c'est à dire non liés chimiquement, et comportant au moins une double liaison à insaturation éthylénique se situe dans le domaine de > 0 à ≤ 1% en poids, par rapport à la dispersion aqueuse de polymère, puis cette teneur résiduelle en monomères est abaissée par l'action d'un système d'amorceurs rédox comprenant au moins un oxydant et au moins un réducteur, caractérisé en ce que le système d'amorceurs rédox comprend, comme réducteur, l'adduit d'une cétone, dont 3-8 atomes de carbone participent à la construction, sur l'anion hydrogénosulfite et/ou l'acide conjugué de cet adduit.

2. Procédé selon la revendication 1, caractérisé en ce que la teneur résiduelle en monomères à abaisser est > 0 à ≤ 0,5% en poids.

3. Procédé selon la revendication 1, caractérisé en ce que la teneur résiduelle en monomères à abaisser est > 0 à ≤ 0,1% en poids.

4. Procédé selon la revendication 1, caractérisé en ce que le polymère dispersé contient, sous forme chimiquement liée, au moins trois monomères, différents les uns des autres, et comportant au moins un groupement à insaturation éthylénique.

5. Procédé selon la revendication 1, caractérisé en ce que le polymère dispersé contient, sous forme chimiquement liée, au moins quatre monomères, différents les uns des autres, et comportant au moins un groupement à insaturation éthylénique.

6. Procédé selon la revendication 1, caractérisé en ce que le polymère dispersé contient, sous forme chimiquement liée, au moins cinq monomères, différents les uns des autres, et comportant au moins un groupement à insaturation éthylénique.

7. Procédé selon la revendication 1, caractérisé en ce que le polymère dispersé contient, sous forme chimiquement liée, au moins six monomères, différents les uns des autres, et comportant au moins un groupement à insaturation éthylénique.

8. Procédé selon la revendication 1, caractérisé en ce que le rapport L_{A}/L_{B} présente une valeur ≥ 1,1, L_{A} représentant la molalité, à 55°C et sous 1 bar, du monomère, appartenant au mélange de monomères résiduels à restreindre, ayant la plus haute molalité dans l'eau dans ces conditions, et L_{B} représentant la molalité du monomère, appartenant au mélange de monomères résiduels à restreindre, ayant la plus basse molalité dans l'eau dans ces conditions.

9. Procédé selon la revendication 8, caractérisé en ce que L_{A}/L_{B} ≥ 1,5.

10. Procédé selon la revendication 8, caractérisé en ce que L_{A}/L_{B} ≥ 5.

11. Procédé selon la revendication 8, caractérisé en ce que L_{A}/L_{B} ≥ 10.

12. Procédé selon la revendication 8, caractérisé en ce que L_{A}/L_{B} ≥ 50.

13. Procédé selon la revendication 8, caractérisé en ce que L_{A}/L_{B} ≥ 100.

14. Procédé selon la revendication 8, caractérisé en ce que L_{A}/L_{B} ≥ 1000.

15. Procédé selon la revendication 8, caractérisé en ce que L_{A}/L_{B} ≥ 100 000.

16. Procédé selon la revendication 1, caractérisé en ce que le mélange de monomères résiduels à restreindre contient au moins un monomère choisi dans le groupe comprenant le styrène, le butadiène, l'acrylate de n-butyle et l'acrylate de 2-éthylhexyle et au moins un monomère choisi dans le groupe comprenant l'acide acrylique, l'acide méthacrylique, l'acide itaconique, l'acrylamide et le méthacrylamide.

17. Procédé selon la revendication 1, caractérisé en ce que le mélange de monomères résiduels à restreindre contient au moins un monomère choisi dans le groupe comprenant le méthacrylate de méthyle, l'acétate de vinyle et l'acrylonitrile et au moins un monomère choisi dans le groupe comprenant l'acide acrylique, l'acide méthacrylique, l'acide itaconique, l'acrylamide et le méthacrylamide.

18. Procédé selon la revendication 1, caractérisé en ce que le mélange de monomères résiduels à restreindre contient de l'acrylonitrile.

19. Procédé selon la revendication 1, caractérisé en ce que le mélange de monomères résiduels à restreindre contient de l'acide acrylique.

20. Procédé selon la revendication 1, caractérisé en ce que le mélange de monomères résiduels à restreindre contient de l'acide acrylique et de l'acrylonitrile.

21. Procédé selon la revendication 1, caractérisé en ce que la teneur volumique en matière solide de la dispersion aqueuse de polymère produite de façon connue en soi vaut 10-50% en volume.

22. Procédé selon la revendication 1, caractérisé en ce que la teneur volumique en matière solide de la dispersion aqueuse de polymère produite de façon connue en soi vaut 20-60% en volume.

23. Procédé selon la revendication 1, caractérisé en ce que la teneur volumique en matière solide de la dispersion aqueuse de polymère produite de façon connue en soi vaut 30-70% en volume.

24. Procédé selon la revendication 1, caractérisé en ce que le polymère dispersé contient, sous forme chimiquement liée, 0,1-5% en poids d'acide acrylique.

25. Procédé selon la revendication 1, caractérisé en ce que le polymère dispersé contient, sous forme chimiquement liée, 0,1-4% en poids d'acide acrylique.

26. Procédé selon la revendication 1, caractérisé en ce que le polymère dispersé contient, sous forme chimiquement liée, 2 5 à 60% en poids d'acide acrylique.

27. Procédé selon la revendication 1, caractérisé en ce que l'action du système d'amorceurs rédox a lieu à une valeur de pH du milieu de dispersion aqueux de 2 à < 7.

28. Procédé selon la revendication 1, caractérisé en ce que l'action du système d'amorceurs rédox a lieu à une valeur de pH du milieu de dispersion aqueux de 2 à 6.

29. Procédé selon la revendication 1, caractérisé en ce que l'action du système d'amorceurs rédox a lieu à une valeur de pH du milieu de dispersion aqueux de 2 à 5.

30. Procédé selon la revendication 1, caractérisé en ce que l'action du système d'amorceurs rédox a lieu à une température de 20-65°C.

31. Procédé selon la revendication 1, caractérisé en ce que la dispersion aqueuse de polymère produite de façon connue en soi est une dispersion secondaire.

32. Procédé selon la revendication 1, caractérisé en ce que la préparation du polymère dispersé de la dispersion aqueuse de polymère produite de façon connue en soi, à partir de monomères comportant au moins un groupement à insaturation éthylénique est effectuée selon la méthode de polymérisation radicalaire en émulsion aqueuse.

33. Procédé selon la revendication 32, caractérisé en ce que l'on mène la polymérisation radicalaire en émulsion aqueuse après le processus d'alimentation.

34. Procédé selon la revendication 33, caractérisé en ce que l'on ajoute dans le récipient de polymérisation 50-100% en poids des monomères à polymériser, à partir du début de la polymérisation radicalaire en émulsion aqueuse.

35. Procédé selon la revendication 33, caractérisé en ce que l'on ajoute dans le récipient de polymérisation 80-100% en poids des monomères à polymériser, à partir du début de la polymérisation radicalaire en émulsion aqueuse.

36. Procédé selon la revendication 32, caractérisé en ce que l'on introduit de façon continue les monomères à utiliser dans le récipient de polymérisation, à partir du début de la polymérisation radicalaire en émulsion aqueuse, de sorte que, à chaque instant de l'alimentation, au moins 80% en poids des monomères déjà introduits dans le récipient de polymérisation sont incorporés en liaison polymère.

37. Procédé selon la revendication 36, caractérisé en ce que à chaque instant de l'alimentation en continu, au moins 90% en poids des monomères déjà introduits dans le récipient de polymérisation sont incorporés en liaison polymère.

38. Procédé selon la revendication 32, caractérisé en ce que le système d'amorceurs radicalaires utilisé pour la préparation du polymère dispersé comprend l'acide peroxodisulfurique et/ou ses sels de métaux alcalins et/ou ses sels d'ammonium.

39. Procédé selon la revendication 32, caractérisé en ce que le système d'amorceurs radicalaires utilisé pour la préparation du polymère dispersé contient exclusivement de l'acide peroxodisulfurique et/ou ses sels de métaux alcalins et/ou ses sels d'ammonium.

40. Procédé selon la revendication 32, caractérisé en ce que l'on emploie une température de polymérisation de 70-100°C pour la préparation du polymère dispersé.

41. Procédé selon la revendication 32, caractérisé en ce que l'on emploie une température de polymérisation de 80-100°C pour la préparation du polymère dispersé.

42. Procédé selon la revendication 32, caractérisé en ce que la composition de monomères à polymériser pour la préparation du polymère dispersé comprend au moins deux monomères, différents l'un de l'autre, comportant au moins un groupement à insaturation éthylénique, et contient en outre
- 70-99,9% en poids d'ester de l'acide acrylique et/ou méthacrylique avec des alcanols à 1-12 atomes de carbone et/ou du styrène,
ou
- 70-99,9% en poids de styrène et/ou de butadiène,
ou
- 70-99,9% en poids de chlorure de vinyle et/ou de chlorure de vinylidène
ou
- 40-99,9% en poids d'acétate de vinyle, de propionate de vinyle et/ou d'éthylène.

43. Procédé selon la revendication 32, caractérisé en ce que la composition de monomères à polymériser pour la préparation du polymère dispersé comprend :
0,1-5% en poids d'au moins un acide carboxylique à 3-6 atomes de carbone et à insaturation α,β-monoéthylénique et/ou son amide (monomères A) et
70-99,9% en poids d'esters de l'acide acrylique et/ou méthacrylique et d'alcanols à 1-12 atomes de carbone et/ou de styrène (monomères B),
ou
0,1-5% en poids d'au moins un acide carboxylique à 3-6 atomes de carbone et à insaturation α,β-monoéthylénique et/ou son amide (monomères A) et
70-99,9% en poids de styrène et/ou de butadiène (monomères B'),
ou
0,1-5% en poids d'au moins un acide carboxylique à 3-6 atomes de carbone et à insaturation α,β-monoéthylénique et/ou son amide (monomères A) et
70-99,9% en poids de chlorure de vinyle et/ou de chlorure de vinylidène (monomères B"),
ou
0,1-5% en poids d'au moins un acide carboxylique à 3-6 atomes de carbone et à insaturation α,β-monoéthylénique et/ou son amide (monomère A) et
40-99,9% en poids d'acétate de vinyle, de propionate de vinyle et/ou d'éthylène (B"').

44. Procédé selon la revendication 32, caractérisé en ce que la composition de monomères à polymériser pour la préparation du polymère dispersé comprend :
0,1-30% en poids d'acrylonitrile (de préférence 0,5-15% en poids) et
70-99,9% en poids d'ester de l'acide acrylique et/ou méthacrylique et d'alcanols à 1-12 atomes de carbone et/ou de styrène,
ou
0,1-30% en poids d'acrylonitrile (de préférence 0,5-15% en poids) et
70-99,9% en poids de styrène et/ou de butadiène,
ou
0,1-40% en poids d'acétate de vinyle et/ou de propionate de vinyle et
60-99,9% en poids d'ester de l'acide acrylique et/ou méthacrylique et d'alcanols à 1-12 atomes de carbone et/ou de styrène,
ou
0,1-5% en poids d'au moins un acide carboxylique à 3-6 atomes de carbone et à insaturation α,β-monoéthylénique et/ou son amide, en particulier d'acide acrylique
0,1-30% en poids d'acrylonitrile (de préférence 0,5-15% en poids) et
69,9-99,9% en poids d'ester de l'acide acrylique et/ou méthacrylique et d'alcanols à 1-12 atomes de carbone et/ou de styrène,
ou
0,1-5% en poids d'au moins un acide carboxylique à 3-6 atomes de carbone et à insaturation α,β-monoéthylénique et/ou son amide, en particulier d'acide acrylique
0,1-30% en poids d'acrylonitrile (de préférence 0,5-15% en poids) et
69,9-99,9% en poids de styrène et/ou de butadiène,
ou
0,1-5% en poids d'au moins un acide carboxylique à 3-6 atomes de carbone et à insaturation α,β-monoéthylénique et/ou son amide, en particulier d'acide acrylique
0,1-40% en poids d'acétate de vinyle et/ou de propionate de vinyle et
59,9-99,9% en poids d'ester de l'acide acrylique et/ou méthacrylique et d'alcanols à 1-12 atomes de carbone et/ou de styrène.

45. Procédé selon la revendication 1, caractérisé en ce que le composant cétonique de l'adduit, utilisé comme réducteur, comporte 3-5 atomes de carbone.

46. Procédé selon la revendication 1, caractérisé en ce que le composant cétonique de l'adduit, utilisé comme réducteur, est l'acétone, la diéthylcétone et/ou la méthyléthylcétone.

47. Procédé selon la revendication 1, caractérisé en ce que le composant cétonique de l'adduit, utilisé comme réducteur, est l'acétone.

48. Procédé selon la revendication 1, caractérisé en ce que l'on utilise, comme réducteur du système d'amorceurs rédox radicalaire, exclusivement l'adduit d'une cétone à 3-8 atomes de carbone sur l'anion hydrogénosulfite et/ou son acide conjugué.

49. Procédé selon la revendication 1, caractérisé en ce que l'on utilise, comme réducteur du système d'amorceurs rédox radicalaire, exclusivement l'adduit de l'acétone sur l'anion hydrogénosulfite et/ou son acide conjugué.

50. Procédé selon la revendication 1, caractérisé en ce que l'on utilise, comme oxydant du système d'amorceurs rédox radicalaire, un peroxyde et/ou un hydroperoxyde.

51. Procédé selon la revendication 1, caractérisé en ce que l'on utilise, comme oxydant du système d'amorceurs rédox radicalaire, le peroxyde d'hydrogène, l'acide peroxodisulfurique, les sels de l'acide peroxodisulfurique, l'hydroperoxyde de pinane, l'hydroperoxyde de tert-butyle, le peroxyde de dibenzoyle et/ou l'hydroperoxyde de cumoyle.

52. Procédé selon la revendication 1, caractérisé en ce que l'on utilise, comme oxydant du système d'amorceurs rédox radicalaire, l'hydroperoxyde de tert-butyle.

53. Procédé selon la revendication 1, caractérisé en ce que le système d'amorceurs rédox radicalaire contient, comme réducteur, l'adduit de l'acétone sur l'anion hydrogénosulfite et/ou son acide conjugué, et, comme oxydant, l'hydroperoxyde de tert-butyle.

54. Procédé selon la revendication 1, caractérisé en ce que le système d'amorceurs rédox radicalaire contient, comme réducteur, exclusivement l'adduit de l'acétone sur l'anion hydrogénosulfite et/ou son acide conjugué, et, comme oxydant, exclusivement l'hydroperoxyde de tert-butyle.

55. Procédé selon la revendication 1, caractérisé en ce que le système d'amorceurs rédox radicalaire comprend en outre un composé métallique soluble dans le milieu réactionnel, dont le composant métallique peut se trouver dans plusieurs degrés d'oxydation.

56. Dispersion aqueuse de polymère, dont le polymère contient, sous forme chimiquement liée, en plus de l'acide acrylique, au moins un autre monomère différent de l'acide acrylique, comportant au moins un groupement à insaturation éthylénique, la teneur en acide acrylique étant inférieure à 100 mg d'acide acrylique par kg de dispersion aqueuse.

57. Dispersion aqueuse de polymère selon la revendication 56, dont la teneur en acide acrylique est inférieure à 50 mg d'acide acrylique par kg de dispersion aqueuse.

58. Dispersion aqueuse de polymère selon la revendication 56, dont la teneur en acide acrylique est inférieure à 40 mg d'acide acrylique par kg de dispersion aqueuse.

59. Dispersion aqueuse de polymère selon la revendication 56, dont la teneur en acide acrylique est inférieure à 25 mg d'acide acrylique par kg de dispersion aqueuse.

60. Dispersion aqueuse de polymère selon la revendication 56, dont la teneur en acide acrylique est inférieure à 10 mg d'acide acrylique par kg de dispersion aqueuse.

61. Dispersion aqueuse de polymère selon la revendication 56, dont le polymère contient sous forme chimiquement liée 0,1-5% en poids d'acide acrylique.

62. Dispersion aqueuse de polymère selon la revendication 56, dont le polymère contient sous forme chimiquement liée 5-60% en poids d'acide acrylique.

63. Dispersion aqueuse de polymère selon la revendication 56, dont le polymère, en plus de l'acide acrylique, est construit à partir d'au moins un monomère comportant un groupement à insaturation éthylénique.

64. Dispersion aqueuse de polymère selon la revendication 56, dont le polymère contient, en plus de l'acide acrylique, sous forme chimiquement liée, au moins un monomère choisi dans le groupe comprenant le styrène, le butadiène, l'acrylate de n-butyle, l'acrylate de 2-éthylhexyle, le méthacrylate de méthyle, l'acétate de vinyle et l'acrylonitrile.

65. Dispersion aqueuse de polymère selon la revendication 56, dont la teneur volumique en matière solide vaut 10-50% en volume.

66. Dispersion aqueuse de polymère selon la revendication 56, dont la teneur volumique en matière solide vaut 20-60% en volume.

67. Dispersion aqueuse de polymère selon la revendication 56, dont la teneur volumique en matière solide vaut 30-70% en volume.

68. Dispersion aqueuse de polymère selon la revendication 56, dont le milieu de dispersion aqueux présente une valeur de pH de 2 à < 7.

69. Dispersion aqueuse de polymère selon la revendication 56, dont le milieu de dispersion aqueux présente une valeur de pH de 2 à 6.

70. Dispersion aqueuse de polymère selon la revendication 56, dont le milieu de dispersion aqueux présente une valeur de pH de 2 à 5.

71. Dispersion aqueuse de polymère selon la revendication 56, dont le polymère, en plus de l'acide acrylique, contient en liaison polymère, par rapport au poids du polymère:
- 70-99,9% en poids d'ester de l'acide acrylique et/ou méthacrylique avec des alcanols à 1-12 atomes de carbone et/ou du styrène,
ou
- 70-99,9% en poids de styrène et/ou de butadiène,
ou
- 70-99,9% en poids de chlorure de vinyle et/ou de chlorure de vinylidène
ou
- 40-99,9% en poids d'acétate de vinyle, de propionate de vinyle et/ou d'éthylène.

72. Dispersion aqueuse de polymère obtenue par un procédé selon la revendication 1.

73. Utilisation d'un système d'amorceurs rédox comprenant, comme réducteur, l'adduit d'une cétone, dont 3-8 atomes de carbone participent à la construction, sur l'anion hydrogénosulfite et/ou l'acide conjugué de cet adduit, pour l'abaissement de la teneur d'une dispersion aqueuse de polymère >0 à ≤ 1% en poids, par rapport à la dispersion aqueuse de polymère, en au moins deux monomères libres, c'est à dire non liés chimiquement, différents l'un de l'autre, et comportant au moins une double liaison à insaturation éthylénique.

74. Utilisation selon la revendication 73, étant spécifié qu'au moins un des deux monomères libres, différents l'un de l'autre, comportant au moins une double liaison à insaturation éthylénique est l'acide acrylique.
